# EUROPEAN PATENT APPLICATION

(11) **EP 4 722 153 A1**
(43) Date of publication of application: **08.04.2026**
(21) Application number: 24815457.7
(22) Date of filing: 27.05.2024
(51) Int. Cl.: C01B 32/174, C08K 3/04, C08L 1/00, C08L 33/02, C08L 39/06, C08L 101/00, H01M 4/62

(54) **CARBON NANOTUBE DISPERSION AND METHOD FOR PRODUCING SAME**

(30) Priority: 29.05.2023 JP 2023087942; 10.08.2023 JP 2023131553; 10.08.2023 JP 2023131559
(71) Applicant: Zeon Corporation, Tokyo 100-8246 (JP)
(72) Inventor: HOSHINO Manabu, Tokyo 100-8246 (JP); HOSAKA Ryu, Tokyo 100-8246 (JP)
(74) Representative: Maiwald GmbH
(86) International application number: PCT/JP2024/019453
(87) International publication number: WO 2024/247974

(57) **Abstract**

Provided is a carbon nanotube dispersion liquid that has excellent dispersion state stability over time and can form a shaped product having excellent electrical conductivity or that can form a shaped product having excellent electrical conductivity. In one aspect, the carbon nanotube dispersion liquid contains a plurality of carbon nanotubes, a solvent, and a thickener, wherein the carbon nanotubes include single-walled carbon nanotubes, at least some of the carbon nanotubes form carbon nanotube bundles, upon observation of the bundles using a scanning electron microscope, an average length of the bundles is more than 1.50 µm, an average diameter of the bundles is 18.0 nm or less, and a number of bundles having a diameter of more than 30.0 nm among 100 of the bundles is 15 or less, and upon observation of the bundles using an optical microscope, an average length of the bundles is 8.0 µm or more.

## Description

### TECHNICAL FIELD

The present disclosure relates to a carbon nanotube dispersion liquid and a method of producing the same.

### BACKGROUND

Carbon nanotubes (hereinafter, also abbreviated as "CNTs") have been attracting attention as materials having excellent characteristics such as electrical conductivity, thermal conductivity, and strength.

Although CNTs have excellent characteristics individually, the small external diameter thereof means that CNTs readily form bundles through Van der Waals forces. For this reason, the temporary dispersion of CNTs in a solvent to produce a carbon nanotube dispersion liquid (CNT dispersion liquid) has conventionally been performed. The obtained CNT dispersion liquid may then be used in production of an electrode for a secondary battery or a shaped product, one example of which is a carbon film formed through aggregation of a plurality of CNTs, for example.

In recent years, attempts have been made to improve various characteristics of shaped products through enhancement of CNT dispersion liquids.

As one example, Patent Literature (PTL) 1 discloses a CNT dispersion liquid containing CNTs, a solvent, and a dispersant, wherein the CNTs have an average external diameter, a full width at half maximum for a peak at a diffraction angle 2θ of 25° ± 2°, and a G/D ratio that are within specific ranges. According to PTL 1, a resin composition, electrode film, or the like having excellent electrical conductivity can be obtained when using this CNT dispersion liquid.

As another example, PTL 2 discloses a CNT dispersion liquid containing CNTs, a dispersant, and a solvent, wherein the CNTs have an average external diameter, a BET specific surface area, and an average fiber length that are within specific ranges. According to PTL 2, a resin composition, electrode film, or the like having excellent electrical conductivity and close adherence can be obtained when using this CNT dispersion liquid.

### CITATION LIST

### Patent Literature

PTL 1: WO2020/004095A1
PTL 2: JP2021-72279A

### SUMMARY

### (Technical Problem)

However, although there has been demand for further improving various characteristics of shaped products formed from CNT dispersion liquids in recent years, there is still room for improvement of the conventional CNT dispersion liquids described above in terms of even further increasing electrical conductivity of a shaped product. The conventional CNT dispersion liquids described above also leave room for further improvement of dispersion state stability over time.

Accordingly, one object of the present disclosure is to provide a carbon nanotube dispersion liquid that has excellent dispersion state stability over time and is capable of forming a shaped product having excellent electrical conductivity.

On the other hand, another object of the present disclosure is to provide a carbon nanotube dispersion liquid that is capable of forming a shaped product having excellent electrical conductivity and a method of producing this carbon nanotube dispersion liquid.

### (Solution to Problem)

The inventors conducted diligent investigation with the aim of solving the problems set forth above. The inventors decided to focus on bundles that are formed through the aggregation of a plurality of CNTs in a CNT dispersion liquid (hereinafter, such bundles are also referred to as "CNT bundles").

### <First aspect>

The inventors discovered that it is possible to obtain a CNT dispersion liquid that has excellent dispersion state stability over time and can increase electrical conductivity of a shaped product by, with respect to a CNT dispersion liquid containing a plurality of CNTs including single-walled CNTs, a solvent, and a thickener, setting the average length of CNT bundles as more than a specific value, the average diameter of CNT bundles as not more than a specific value, and the proportion of CNT bundles having a diameter of more than 30.0 nm as not more than a specific value upon observation using a scanning electron microscope (hereinafter, also abbreviated as "SEM") and by setting the average length of CNT bundles as not less than a specific value upon observation using an optical microscope, and, in this manner, the inventors completed the present disclosure (first aspect).

### <Second aspect>

On the other hand, the inventors discovered that it is possible to obtain a CNT dispersion liquid that has excellent dispersion state stability over time and can increase electrical conductivity of a shaped product by, with respect to a CNT dispersion liquid containing a plurality of CNTs including single-walled CNTs, a solvent, and a thickener, setting the average length of CNT bundles as more than a specific value, the average diameter of CNT bundles as not more than a specific value, and the proportion of CNT bundles having a diameter of more than 30.0 nm as not more than a specific value upon observation using an SEM, and, in this manner, the inventors completed the present disclosure (second aspect).

### <Third aspect>

On the other hand, the inventors discovered that it is possible to increase electrical conductivity of a shaped product by, with respect to a CNT dispersion liquid containing a plurality of CNTs including single-walled CNTs, a solvent, and a dispersant, setting the average length of CNT bundles as more than a specific value, the average diameter of CNT bundles as less than a specific value, and the proportion of CNT bundles having a diameter of more than 30.0 nm as not more than a specific value upon observation using an SEM, and, in this manner, the inventors completed the present disclosure (third aspect).

Specifically, the present disclosure is aimed at advantageously solving the problems set forth above, and, according to the present disclosure, CNT dispersion liquids according to the following {1} to {9} and methods of producing a CNT dispersion liquid according to the following {10} and {11} are provided.

Note that the following {1} corresponds to the first aspect, the following {2} corresponds to the second aspect, the following {3} to {5} correspond to the first aspect and the second aspect, and the following {6} to {11} correspond to the third aspect.
{1} A carbon nanotube dispersion liquid comprising: a plurality of carbon nanotubes; a solvent; and a thickener, wherein the plurality of carbon nanotubes include single-walled carbon nanotubes, at least some of the plurality of carbon nanotubes form carbon nanotube bundles, upon observation of the carbon nanotube bundles using a scanning electron microscope, an average length of the carbon nanotube bundles is more than 1.50 µm, an average diameter of the carbon nanotube bundles is 18.0 nm or less, and a number of bundles having a diameter of more than 30.0 nm among 100 of the carbon nanotube bundles is 15 or less, and upon observation of the carbon nanotube bundles using an optical microscope, an average length of the carbon nanotube bundles is 8.0 µm or more.

In the case of a CNT dispersion liquid that contains a plurality of CNTs including single-walled CNTs, a solvent, and a thickener, that upon observation using an SEM has an average length of CNT bundles of more than a specific value, an average diameter of CNT bundles of not more than a specific value, and a number of bundles having a diameter of more than 30.0 nm among 100 CNT bundles of not more than a specific value, and that upon observation using an optical microscope has an average length of CNT bundles of not less than a specific value, this CNT dispersion liquid has excellent dispersion state stability over time and can cause a conductive film to display excellent electrical conductivity.

Note that the "average length of CNT bundles", "average diameter of CNT bundles", and "number of bundles having a diameter of more than 30.0 nm among 100 CNT bundles" upon observation using an SEM and the "average length of CNT bundles" upon observation using an optical microscope that are referred to in the present disclosure can be measured by methods described in the EXAMPLES section of the present specification.

{2} A carbon nanotube dispersion liquid comprising: a plurality of carbon nanotubes; a solvent; and a thickener, wherein the plurality of carbon nanotubes include single-walled carbon nanotubes, at least some of the plurality of carbon nanotubes form carbon nanotube bundles, and upon observation of the carbon nanotube bundles using a scanning electron microscope, an average length of the carbon nanotube bundles is more than 1.50 µm, an average diameter of the carbon nanotube bundles is 16.0 nm or less, and a number of bundles having a diameter of more than 30.0 nm among 100 of the carbon nanotube bundles is 15 or less.

In the case of a CNT dispersion liquid that contains a plurality of CNTs including single-walled CNTs, a solvent, and a thickener and that upon observation using an SEM has an average length of CNT bundles of more than a specific value, an average diameter of CNT bundles of not more than a specific value, and a number of bundles having a diameter of more than 30.0 nm among 100 CNT bundles of not more than a specific value, this CNT dispersion liquid has excellent dispersion state stability over time and can cause a conductive film to display excellent electrical conductivity.

{3} The carbon nanotube dispersion liquid according to the foregoing {1} or {2}, wherein an average aspect ratio of the carbon nanotube bundles is more than 100.

When the average aspect ratio of the CNT bundles is more than 100, dispersion state stability over time of the CNT dispersion liquid can be further improved, and electrical conductivity of a shaped product can be even further increased.

Note that the "average aspect ratio" of CNT bundles referred to in the present disclosure can be determined by calculating a ratio (average length/average diameter) of the average length and the average diameter of CNT bundles upon observation using an SEM.

{4} The carbon nanotube dispersion liquid according to any one of the foregoing {1} to {3}, wherein a G/D ratio of the carbon nanotubes is not less than 0.5 and not more than 120.

When the G/D ratio of the CNTs is within the range set forth above, dispersion state stability over time of the CNT dispersion liquid can be further improved, and electrical conductivity of a shaped product can be even further increased.

Note that the "G/D ratio" referred to in the present disclosure indicates a ratio of G band peak intensity relative to D band peak intensity in a Raman spectrum and can be measured by a method described in the EXAMPLES section of the present specification.

{5} The carbon nanotube dispersion liquid according to any one of the foregoing {1} to {4}, wherein the thickener includes one or more selected from the group consisting of a cellulosic polymer, a polycarboxylic acid, and polyvinylpyrrolidone.

When the thickener includes one or more selected from a cellulosic polymer, a polycarboxylic acid, and polyvinylpyrrolidone, dispersion state stability over time of the CNT dispersion liquid can be further improved, and electrical conductivity of a shaped product can be even further increased.

{6} A carbon nanotube dispersion liquid comprising: a plurality of carbon nanotubes; a solvent; and a dispersant, wherein the plurality of carbon nanotubes include single-walled carbon nanotubes, at least some of the plurality of carbon nanotubes form carbon nanotube bundles, and upon observation of the carbon nanotube bundles using a scanning electron microscope, an average length of the carbon nanotube bundles is more than 1.5 µm, an average diameter of the carbon nanotube bundles is less than 15.0 nm, and a number of bundles having a diameter of more than 30.0 nm among 100 of the carbon nanotube bundles is 10 or less.

Through a CNT dispersion liquid that contains a plurality of CNTs including single-walled CNTs, a solvent, and a dispersant and that upon observation using an SEM has an average length of CNT bundles of more than a specific value, an average diameter of CNT bundles of less than a specific value, and a number of bundles having a diameter of more than 30.0 nm among 100 CNT bundles of not more than a specific value, it is possible to cause a conductive film to display excellent electrical conductivity.

{7} The carbon nanotube dispersion liquid according to the foregoing {6}, wherein an average aspect ratio of the carbon nanotube bundles is more than 120.

When the average aspect ratio of the CNT bundles is more than 120, electrical conductivity of a shaped product can be even further increased.

Note that the "average aspect ratio" of CNT bundles referred to in the present disclosure can be determined by calculating a ratio (average length/average diameter) of the average length and the average diameter of CNT bundles.

{8} The carbon nanotube dispersion liquid according to the foregoing {6} or {7}, wherein a G/D ratio of the carbon nanotubes is not less than 0.5 and not more than 20.

When the G/D ratio of the CNTs is within the range set forth above, electrical conductivity of a shaped product can be even further increased.

Note that the "G/D ratio" referred to in the present disclosure indicates a ratio of G band peak intensity relative to D band peak intensity in a Raman spectrum and can be measured by a method described in the EXAMPLES section of the present specification.

{9} The carbon nanotube dispersion liquid according to any one of the foregoing {6} to {8}, wherein a harmonic mean diameter of the carbon nanotubes is more than 500 nm.

When the harmonic mean diameter of the CNTs is more than 500 nm, electrical conductivity of a shaped product can be even further increased.

Note that the "harmonic mean diameter" referred to in the present disclosure indicates the z-average diameter (z-Average) measured by dynamic light scattering (DLS) and can be measured by a method described in the EXAMPLES section of the present specification.

{10} A method of producing a carbon nanotube dispersion liquid that is a method of producing the carbon nanotube dispersion liquid according to any one of the foregoing {6} to {9}, comprising performing dispersing treatment of a mixture containing the plurality of carbon nanotubes, the solvent, and the dispersant using a wet jet mill.

Through a method of producing a CNT dispersion liquid that includes the step described above, it is possible to produce a CNT dispersion liquid that is capable of forming a shaped product having excellent electrical conductivity.

{11} The method of producing a carbon nanotube dispersion liquid according to the foregoing {10}, wherein pressure applied to the mixture in the dispersing treatment is 50 MPa or less, and a number of passes in the dispersing treatment is 10 or more.

By performing dispersing treatment by the wet jet mill under conditions of a pressure of 50 MPa or less and a number of passes of 10 or more, it is possible to even further increase electrical conductivity of an obtained shaped product.

Note that the "number of passes" referred to in the present disclosure means the number of times that the entire amount of a mixture passes through a wet jet mill.

### (Advantageous Effect)

According to the present disclosure (first aspect and second aspect), it is possible to provide a carbon nanotube dispersion liquid that has excellent dispersion state stability over time and is capable of forming a shaped product having excellent electrical conductivity.

Moreover, according to the present disclosure (third aspect), it is possible to provide a carbon nanotube dispersion liquid that is capable of forming a shaped product having excellent electrical conductivity and a method of producing this carbon nanotube dispersion liquid.

### DETAILED DESCRIPTION

### (First aspect)

The following provides a detailed description of embodiments of the first aspect (CNT dispersion liquid).

A presently disclosed CNT dispersion liquid can be used as a material in formation of a shaped product, examples of which include a carbon film and an elastomer shaped product, an electrode for a secondary battery, or the like, for example, without any specific limitations.

### (Carbon nanotube dispersion liquid)

The presently disclosed CNT dispersion liquid contains at least CNTs, a solvent, and a thickener and optionally contains components other than the CNTs, solvent, and thickener (i.e., other components). Note that at least some of the plurality of CNTs are single-walled CNTs and form CNT bundles in the CNT dispersion liquid.

Features of the presently disclosed CNT dispersion liquid are that upon observation using an SEM, the average length of CNT bundles is more than 1.50 µm, the average diameter of CNT bundles is 18.0 nm or less, and the number of bundles having a diameter of more than 30.0 nm among 100 CNT bundles is 15 or less and that upon observation using an optical microscope, the average length of CNT bundles is 8.0 µm or more.

Note that a CNT bundle is a bundle that is formed as a result of a plurality of CNTs aggregating into the form of a bundle along a major axis direction of the CNTs.

As a result of the presently disclosed CNT dispersion liquid having an average length of CNT bundles of more than a specific value, an average diameter of CNT bundles of not more than a specific value, and a number of bundles having a diameter of more than 30.0 nm among 100 CNT bundles of not more than a specific value upon observation using an SEM and having an average length of CNT bundles of not less than a specific value upon observation using an optical microscope, this CNT dispersion liquid has excellent dispersion state stability over time and can also cause a shaped product to display excellent electrical conductivity. Although it is not certain why the above-described effects are obtained by using the presently disclosed CNT dispersion liquid, the reason for this is presumed to be as follows.

The inventors decided to focus on CNT bundles formed of a plurality of CNTs in a CNT dispersion liquid with the aim of improving dispersibility of the CNT dispersion liquid. When CNT bundles have a smaller average diameter, the number of CNTs forming each bundle is also smaller. Moreover, when the number of bundles having a diameter of more than 30.0 nm among 100 CNT bundles is smaller, the number of CNT bundles present in a CNT dispersion liquid is larger. Setting the average diameter of CNT bundles as 18.0 nm or less and setting the number of bundles having a diameter of more than 30.0 nm among 100 CNT bundles as 15 or less in the presently disclosed CNT dispersion liquid ensures that a sufficient number of CNT bundles are present in the CNT dispersion liquid. In addition, sufficient length of CNT bundles present in the presently disclosed CNT dispersion liquid is ensured as a result of the presently disclosed CNT dispersion liquid having an average length of CNT bundles of more than 1.50 µm upon observation using an SEM and having an average length of CNT bundles of 8.0 µm or more upon observation using an optical microscope. Note that the reason that the average length of CNT bundles normally differs upon observation using an SEM and upon observation using an optical microscope is thought to be as follows. An SEM having high resolution enables observation of CNT bundles having a smaller diameter, whereas CNT bundles having a small diameter cannot be observed using an optical microscope having lower resolution than an SEM. For this reason, CNT bundles that are formed of numerous CNTs and that have a large diameter and length tend to be selectively observed when using an optical microscope, thus resulting in a different average length of CNT bundles upon observation using an SEM and upon observation using an optical microscope. Moreover, in the case of a CNT dispersion liquid in which the number and length of CNT bundles are sufficiently ensured as described above, CNTs are dispersed stably over time, and good electrical conduction paths can be formed in a shaped product using this CNT dispersion liquid due to CNT bundles of sufficient length being distributed in the shaped product.

For the reason described above, the presently disclosed CNT dispersion liquid is thought to have excellent dispersion state stability over time, and the use of this CNT dispersion liquid is thought to enable the display of excellent electrical conductivity by a conductive film.

### <CNTs>

No specific limitations are placed on the CNTs so long as they include single-walled CNTs. It may be the case that only single-walled CNTs are used as the CNTs or that single-walled CNTs and multi-walled CNTs are used in combination as the CNTs.

### <<Properties>>

### [Average length upon observation using SEM]

The average length of CNT bundles upon observation using an SEM is required to be more than 1.50 µm, and is preferably 1.60 µm or more, more preferably 1.70 µm or more, even more preferably 1.80 µm or more, further preferably 1.90 µm or more, and particularly preferably 2.00 µm or more. In a situation in which the average length of CNT bundles upon observation using an SEM is 1.50 µm or less, electrical conductivity of a shaped product decreases. Moreover, although no specific limitations are placed on the upper limit for the average length of CNT bundles upon observation using an SEM, the average length can be set as 3.50 µm or less, or can be set as 3.00 µm or less, for example.

### [Average length upon observation using optical microscope]

The average length of CNT bundles upon observation using an optical microscope is required to be 8.0 µm or more, and is preferably 10.0 µm or more, more preferably 12.0 µm or more, and even more preferably 15.0 µm or more. In a situation in which the average length of CNT bundles upon observation using an optical microscope is less than 8.0 µm, electrical conductivity of a shaped product decreases. Moreover, although no specific limitations are placed on the upper limit for the average length of CNT bundles upon observation using an optical microscope, the average length can be set as 30.0 µm or less, can be set as 25.0 µm or less, or can be set as 20.0 µm or less, for example.

Note that the average length of CNT bundles upon observation using an optical microscope is normally larger than the average length of CNT bundles upon observation using an SEM.

Also note that the average length of CNT bundles in the CNT dispersion liquid can be adjusted by altering the length of feedstock CNTs (CNTs used as a feedstock in production of the CNT dispersion liquid) and the conditions of dispersing treatment, for example. In a situation in which a wet jet mill is used in dispersing treatment, for example, increasing the pressure that is applied to a mixture passing through the jet mill reduces the average length of CNT bundles, whereas reducing the pressure increases the average length. Moreover, increasing the number of passes of dispersing treatment by the wet jet mill (number of times that the entire amount of a mixture passes through the wet jet mill) reduces the average length of CNT bundles in the CNT dispersion liquid, whereas reducing the number of passes increases the average length.

### [Average diameter]

The average diameter of CNT bundles is required to be 18.0 nm or less, and is preferably 17.5 nm or less, more preferably 17.0 nm or less, even more preferably 16.5 nm or less, further preferably 16.0 nm or less, and particularly preferably 15.5 nm or less. In a situation in which the average diameter of CNT bundles is more than 18.0 nm, dispersion state stability over time of the CNT dispersion liquid decreases, and electrical conductivity of an obtained shaped product also decreases. Moreover, although no specific limitations are placed on the lower limit for the average diameter of CNT bundles, the average diameter can be set as 13.5 nm or more, or can be set as 14.0 nm or more, for example.

Note that the average diameter of CNT bundles in the CNT dispersion liquid can be adjusted by altering the diameter of feedstock CNTs and the conditions of dispersing treatment, for example. In a situation in which a wet jet mill is used in dispersing treatment, for example, increasing the pressure that is applied to a mixture passing through the wet jet mill reduces the average diameter of CNT bundles, whereas reducing the pressure increases the average diameter. Moreover, increasing the number of passes of dispersing treatment by the wet jet mill reduces the average diameter of CNT bundles in the CNT dispersion liquid, whereas reducing the number of passes increases the average diameter.

### [Number of CNT bundles having diameter of more than 30.0 nm]

The number of CNT bundles having a diameter of more than 30.0 nm is required to be 15 or less, and is preferably 14 or less, more preferably 13 or less, even more preferably 12 or less, further preferably 11 or less, and particularly preferably 10 or less. In a situation in which the number of CNT bundles having a diameter of more than 30.0 nm is more than 15, dispersion state stability over time of the CNT dispersion liquid decreases, and electrical conductivity of an obtained shaped product also decreases. Moreover, although no specific limitations are placed on the lower limit for the number of CNT bundles having a diameter of more than 30.0 nm, the number thereof can be set as 1 or more, or can be set as 2 or more, for example.

Note that the number of CNT bundles having a diameter of more than 30.0 nm can be adjusted by altering the length and diameter of feedstock CNTs and the conditions of dispersing treatment, for example. In a situation in which a wet jet mill is used in dispersing treatment, for example, increasing the pressure applied to a mixture passing through the wet jet mill reduces the number of CNT bundles having a diameter of more than 30.0 nm, whereas reducing the pressure increases the number of CNT bundles having a diameter of more than 30.0 nm. Moreover, increasing the number of passes of dispersing treatment by the wet jet mill reduces the number of CNT bundles having a diameter of more than 30.0 nm, whereas reducing the number of passes increases the number of CNT bundles having a diameter of more than 30.0 nm.

### [Average aspect ratio]

The average aspect ratio of CNT bundles is preferably more than 100, more preferably 110 or more, even more preferably 120 or more, further preferably 130 or more, and particularly preferably 135 or more. When the average aspect ratio of CNT bundles is more than 100, dispersion state stability over time of the CNT dispersion liquid can be further improved, and electrical conductivity of a shaped product can be even further increased. Moreover, although no specific limitations are placed on the upper limit for the average aspect ratio of CNT bundles, the average aspect ratio can be set as 250 or less, can be set as 225 or less, or can be set as 200 or less, for example.

### [G/D ratio]

The G/D ratio of the CNTs is preferably 0.5 or more, and more preferably 1 or more, and is preferably 120 or less, more preferably 110 or less, even more preferably 95 or less, further preferably 70 or less, even further preferably 45 or less, and particularly preferably 20 or less. When the G/D ratio of the CNTs is within any of the ranges set forth above, dispersion state stability over time of the CNT dispersion liquid can be further improved, and electrical conductivity of a shaped product can be even further increased.

### <<Proportional content>>

The proportional content of the CNTs in the CNT dispersion liquid when the entire amount of the CNT dispersion liquid is taken to be 100 mass% is preferably 0.01 mass% or more, more preferably 0.1 mass% or more, and even more preferably 0.2 mass% or more, and is preferably 2 mass% or less, more preferably 1 mass% or less, and even more preferably 0.5 mass% or less. When the proportion constituted by CNTs in the CNT dispersion liquid is 0.01 mass% or more, electrical conductivity of a shaped product can be even further increased, and producibility of a shaped product can be improved. On the other hand, when the proportion constituted by the CNTs in the CNT dispersion liquid is 2 mass% or less, dispersion state stability over time of the CNT dispersion liquid can be further improved.

### <Solvent>

It may be the case that the presently disclosed CNT dispersion liquid contains only water as the solvent, that the presently disclosed CNT dispersion liquid contains only an organic solvent (for example, an ester, a ketone, or an alcohol) as the solvent, or that the presently disclosed CNT dispersion liquid contains a mixture of water and an organic solvent as the solvent. From a viewpoint of further improving dispersion state stability over time of the CNT dispersion liquid while also even further increasing electrical conductivity of a shaped product, it is preferable that the presently disclosed CNT dispersion liquid contains water as the solvent. Note that the presently disclosed CNT dispersion liquid may contain one type of organic solvent or may contain two or more types of organic solvents.

The proportion constituted by water among the solvent in the presently disclosed CNT dispersion liquid when the entire amount of the solvent is taken to be 100 mass% is preferably 70 mass% or more, more preferably 90 mass% or more, even more preferably 99 mass% or more, and particularly preferably 100 mass% (i.e., it is particularly preferable that the presently disclosed CNT dispersion liquid contains only water as the solvent). When the proportion constituted by water among the solvent in the CNT dispersion liquid is not less than any of the lower limits set forth above, dispersion state stability over time of the CNT dispersion liquid can be further improved, and electrical conductivity of a shaped product can be even further increased.

### <Thickener>

Known thickeners can be used as the thickener without any specific limitations. For example, a water-soluble polymer such as a cellulosic polymer, a polycarboxylic acid, or a water-soluble vinyl polymer can be used as the thickener.

Note that when a polymer is said to be "water-soluble" in the present disclosure, this means that when 0.5 g (in terms of solid content) of the polymer is dissolved in 100 g of water at a temperature of 25°C, the amount of insoluble content is less than 10.0 mass%.

The cellulosic polymer may be carboxymethyl cellulose, methyl cellulose, hydroxypropyl methylcellulose, hydroxyethyl methylcellulose, or a salt or derivative of any thereof, for example.

The polycarboxylic acid may be polyacrylic acid, polymethacrylic acid, alginic acid, or a salt or derivative of any thereof, for example.

The water-soluble vinyl polymer may be polyvinylpyrrolidone, polyvinyl alcohol, polyvinyl methyl ether, poly(N-vinylacetamide), polyacrylamide, or polyimide, for example.

The aforementioned salt may be an ammonium salt, an alkali metal salt such as a sodium salt, or the like. Moreover, the aforementioned derivative may be an ether, an ester such as an alkyl ester, or the like.

One of the above-described thickeners may be used individually, or two or more of the above-described thickeners may be used in combination in a freely selected ratio. Of these examples, cellulosic polymers, polycarboxylic acids, and polyvinylpyrrolidone are preferable as the thickener from a viewpoint of further improving dispersion state stability over time of the CNT dispersion liquid while also even further increasing electrical conductivity of a shaped product, with carboxymethyl cellulose and salts thereof, polyacrylic acids and salts thereof, and polyvinylpyrrolidone being more preferable.

### <<Weight-average molecular weight>>

The weight-average molecular weight of the thickener is preferably 5,000 or more, and more preferably 10,000 or more, and is preferably 1,000,000 or less, and more preferably 500,000 or less. When the weight-average molecular weight of the thickener is 5,000 or more, dispersibility of the CNTs in the CNT dispersion liquid can be improved. Moreover, when the weight-average molecular weight of the thickener is 1,000,000 or less, an increase of viscosity of the CNT dispersion liquid can be suppressed.

Note that the "weight-average molecular weight" referred to in the present disclosure can be measured as a standard polystyrene-equivalent value by gel permeation chromatography.

### <<Proportional content>>

The proportion in which the thickener is contained in the CNT dispersion liquid when the entire amount of the CNT dispersion liquid is taken to be 100 mass% is preferably 0.1 mass% or more, and more preferably 0.2 mass% or more, and is preferably 10 mass% or less, more preferably 5 mass% or less, and even more preferably 2 mass% or less. When the proportion constituted by the thickener in the CNT dispersion liquid is within any of the ranges set forth above, dispersion state stability over time of the CNT dispersion liquid can be further improved, and electrical conductivity of a shaped product can be even further increased.

The content of the thickener in the CNT dispersion liquid per 100 parts by mass of the CNTs is preferably 50 parts by mass or more, and more preferably 100 parts by mass or more, and is preferably 500 parts by mass or less, more preferably 400 parts by mass or less, and even more preferably 300 parts by mass or less. When the quantitative ratio of the thickener relative to the CNTs in the CNT dispersion liquid is within any of the ranges set forth above, dispersion state stability over time of the CNT dispersion liquid can be further improved, and electrical conductivity of a shaped product can be even further increased.

### <Other components>

Examples of other components that can optionally be contained in the CNT dispersion liquid include conductive materials other than CNTs, polymer components other than the above-described thickener, antioxidants, and resins. Note that the CNT dispersion liquid may contain just one other component or may contain two or more other components.

The proportion in which other components are contained in the CNT dispersion liquid when the entire amount of the CNT dispersion liquid is taken to be 100 mass% is preferably 5 mass% or less, more preferably 1 mass% or less, even more preferably 0.5 mass% or less, further preferably 0.1 mass% or less, and particularly preferably 0 mass% (i.e., it is particularly preferable that the presently disclosed CNT dispersion liquid does not contain other components).

### <Production of CNT dispersion liquid>

The presently disclosed CNT dispersion liquid can be produced by, for example, performing dispersing treatment of a mixture containing the above-described CNTs, solvent, and thickener and also other optional components. The dispersing treatment can be performed using a mixer such as a wet jet mill, a bead mill, a ball mill, a sand mill, a pigment disperser, a grinding machine, an ultrasonic disperser, a homogenizer, a planetary mixer, or a FILMIX, for example, without any specific limitations. In particular, it is preferable that a wet jet mill is used from a viewpoint of further improving dispersion state stability over time of the CNT dispersion liquid while also even further increasing electrical conductivity of a shaped product. The wet jet mill may be a Nanovater^{®} (Nanovater is a registered trademark in Japan, other countries, or both; produced by Yoshida Kikai Co., Ltd.), a BERYU SYSTEM PRO (produced by Beryu Corp.), an ultra-high pressure wet micronization device (produced by Yoshida Kogyo), a NANOMIZER^{®} (NANOMIZER is a registered trademark in Japan, other countries, or both; produced by NANOMIZER Inc.), a Star Burst^{®} (Star Burst is a registered trademark in Japan, other countries, or both; produced by Sugino Machine Limited), or the like, for example.

A nozzle that is included in the wet jet mill may be a straight nozzle, a cross nozzle, or the like, for example. A straight nozzle has an I-type nozzle cross-section and has comparatively low treatment energy. On the other hand, a cross nozzle has an X-type nozzle cross-section and has high treatment energy compared to a straight nozzle. From a viewpoint of further improving dispersion state stability over time of the CNT dispersion liquid while also even further increasing electrical conductivity of a shaped product, it is preferable to use a straight nozzle as the nozzle of the wet jet mill.

The pressure that is applied in dispersing treatment of the mixture by the wet jet mill is preferably 10 MPa or more, more preferably 20 MPa or more, and even more preferably 40 MPa or more, and is preferably 200 MPa or less, and more preferably 150 MPa or less. When the pressure applied to the mixture is 10 MPa or more, dispersion state stability over time of the CNT dispersion liquid can be further improved, and electrical conductivity of an obtained shaped product can be even further increased. Moreover, when the pressure applied to the mixture is 200 MPa or less, electrical conductivity of an obtained shaped product can be even further increased as a result of severing of CNTs by the dispersing treatment being inhibited.

The number of passes of dispersing treatment by the wet jet mill is preferably 10 or more, and more preferably 15 or more, and is preferably 100 or less, more preferably 80 or less, and even more preferably 60 or less. When the number of passes of dispersing treatment by the wet jet mill is 10 or more, dispersion state stability over time of the CNT dispersion liquid can be further improved, and electrical conductivity of an obtained shaped product can be even further increased. Moreover, when the number of passes of dispersing treatment by the wet jet mill is 100 or less, electrical conductivity of an obtained shaped product can be even further increased as a result of severing of CNTs by the dispersing treatment being inhibited, and sufficient production efficiency of the CNT dispersion liquid can also be ensured.

### (Second aspect)

The following provides a detailed description of embodiments of the second aspect (CNT dispersion liquid).

A presently disclosed CNT dispersion liquid can be used as a material in formation of a shaped product, examples of which include a carbon film and an elastomer shaped product, an electrode for a secondary battery, or the like, for example, without any specific limitations.

### (Carbon nanotube dispersion liquid)

The presently disclosed CNT dispersion liquid contains at least CNTs, a solvent, and a thickener and optionally contains components other than the CNTs, solvent, and thickener (i.e., other components). Note that at least some of the plurality of CNTs are single-walled CNTs and form CNT bundles in the CNT dispersion liquid.

Features of the presently disclosed CNT dispersion liquid are that the average length of CNT bundles is more than 1.50 µm, the average diameter of CNT bundles is 16.0 nm or less, and the number of bundles having a diameter of more than 30.0 nm among 100 CNT bundles is 15 or less.

Note that a CNT bundle is a bundle that is formed as a result of a plurality of CNTs aggregating into the form of a bundle along a major axis direction of the CNTs.

As a result of the presently disclosed CNT dispersion liquid having an average length of CNT bundles of more than a specific value, an average diameter of CNT bundles of not more than a specific value, and a number of bundles having a diameter of more than 30.0 nm among 100 CNT bundles of not more than a specific value, this CNT dispersion liquid has excellent dispersion state stability over time and can also cause a shaped product to display excellent electrical conductivity. Although it is not certain why the above-described effects are obtained by using the presently disclosed CNT dispersion liquid, the reason for this is presumed to be as follows.

The inventors decided to focus on CNT bundles formed of a plurality of CNTs in a CNT dispersion liquid with the aim of improving dispersibility of the CNT dispersion liquid. When CNT bundles have a smaller average diameter, the number of CNTs forming each bundle is also smaller. Moreover, when the number of bundles having a diameter of more than 30.0 nm among 100 CNT bundles is smaller, the number of CNT bundles present in a CNT dispersion liquid is larger. Setting the average diameter of CNT bundles as 16.0 nm or less and setting the number of bundles having a diameter of more than 30.0 nm among 100 CNT bundles as 15 or less in the presently disclosed CNT dispersion liquid ensures that a sufficient number of CNT bundles are present in the CNT dispersion liquid. In addition, sufficient length of CNT bundles present in the presently disclosed CNT dispersion liquid is ensured as a result of the presently disclosed CNT dispersion liquid having an average length of CNT bundles of more than 1.50 µm. In the case of a CNT dispersion liquid in which the number and length of CNT bundles are sufficiently ensured in this manner, CNTs are dispersed stably over time, and good electrical conduction paths can be formed in a shaped product using this CNT dispersion liquid due to CNT bundles of sufficient length being distributed in the shaped product.

For the reason described above, the presently disclosed CNT dispersion liquid is thought to have excellent dispersion state stability over time, and the use of this CNT dispersion liquid is thought to enable the display of excellent electrical conductivity by a conductive film.

### <CNTs>

No specific limitations are placed on the CNTs so long as they include single-walled CNTs. It may be the case that only single-walled CNTs are used as the CNTs or that single-walled CNTs and multi-walled CNTs are used in combination as the CNTs.

### <<Properties>>

### [Average length of CNT bundles]

The average length of CNT bundles is required to be more than 1.50 µm, and is preferably 1.60 µm or more, more preferably 1.70 µm or more, even more preferably 1.80 µm or more, and particularly preferably 1.90 µm or more. In a situation in which the average length of CNT bundles is 1.50 µm or less, electrical conductivity of a shaped product decreases. Moreover, although no specific limitations are placed on the upper limit for the average length of CNT bundles, the average length can be set as 3.50 µm or less, or can be set as 3.00 µm or less, for example.

Note that the average length of CNT bundles in the CNT dispersion liquid can be adjusted by altering the length of feedstock CNTs (CNTs used as a feedstock in production of the CNT dispersion liquid) and the conditions of dispersing treatment, for example. In a situation in which a wet jet mill is used in dispersing treatment for example, increasing the pressure that is applied to a mixture passing through the jet mill reduces the average length of CNT bundles, whereas reducing the pressure increases the average length. Moreover, increasing the number of passes of dispersing treatment by the wet jet mill (number of times that the entire amount of a mixture passes through the wet jet mill) reduces the average length of CNT bundles in the CNT dispersion liquid, whereas reducing the number of passes increases the average length.

### [Average diameter of CNT bundles]

The average diameter of CNT bundles is required to be 16.0 nm or less, and is preferably 15.9 nm or less, more preferably 15.8 nm or less, and even more preferably 15.7 nm or less. In a situation in which the average diameter of CNT bundles is more than 16.0 nm, dispersion state stability over time of the CNT dispersion liquid decreases, and electrical conductivity of an obtained shaped product also decreases. Moreover, although no specific limitations are placed on the lower limit for the average diameter of CNT bundles, the average diameter can be set as 13.5 nm or more, or can be set as 14.0 nm or more, for example.

Note that the average diameter of CNT bundles in the CNT dispersion liquid can be adjusted by altering the diameter of feedstock CNTs and the conditions of dispersing treatment, for example. In a situation in which a wet jet mill is used in dispersing treatment, for example, increasing the pressure that is applied to a mixture passing through the wet jet mill reduces the average diameter of CNT bundles, whereas reducing the pressure increases the average diameter. Moreover, increasing the number of passes of dispersing treatment by the wet jet mill reduces the average diameter of CNT bundles in the CNT dispersion liquid, whereas reducing the number of passes increases the average diameter.

### [Number of CNT bundles having diameter of more than 30.0 nm]

The number of CNT bundles having a diameter of more than 30.0 nm is required to be 15 or less, and is preferably 14 or less, more preferably 13 or less, even more preferably 12 or less, further preferably 11 or less, and particularly preferably 10 or less. In a situation in which the number of CNT bundles having a diameter of more than 30.0 nm is more than 15, dispersion state stability over time of the CNT dispersion liquid decreases, and electrical conductivity of an obtained shaped product also decreases. Moreover, although no specific limitations are placed on the lower limit for the number of CNT bundles having a diameter of more than 30.0 nm, the number of CNT bundles having a diameter of more than 30.0 nm can be set as 1 or more, or can be set as 2 or more, for example.

Note that the number of CNT bundles having a diameter of more than 30.0 nm can be adjusted by altering the length and diameter of feedstock CNTs and the conditions of dispersing treatment, for example. In a situation in which a wet jet mill is used in dispersing treatment, for example, increasing the pressure that is applied to a mixture passing through the wet jet mill reduces the number of CNT bundles having a diameter of more than 30.0 nm, whereas reducing the pressure increases the number of CNT bundles having a diameter of more than 30.0 nm. Moreover, increasing the number of passes of dispersing treatment by the wet jet mill reduces the number of CNT bundles having a diameter of more than 30.0 nm, whereas reducing the number of passes increases the number of CNT bundles having a diameter of more than 30.0 nm.

### [Average aspect ratio of CNT bundles]

The average aspect ratio of CNT bundles is preferably more than 100, more preferably 110 or more, even more preferably 120 or more, and particularly preferably 125 or more. When the average aspect ratio of CNT bundles is more than 100, dispersion state stability over time of the CNT dispersion liquid can be further improved, and electrical conductivity of a shaped product can be even further increased. Moreover, although no specific limitations are placed on the upper limit for the average aspect ratio of CNT bundles, the average aspect ratio can be set as 250 or less, can be set as 225 or less, or can be set as 200 or less, for example.

### [G/D ratio]

The G/D ratio of the CNTs is preferably 0.5 or more, and more preferably 1 or more, and is preferably 120 or less, more preferably 110 or less, even more preferably 95 or less, further preferably 70 or less, even further preferably 45 or less, and particularly preferably 20 or less. When the G/D ratio of the CNTs is within any of the ranges set forth above, dispersion state stability over time of the CNT dispersion liquid can be further improved, and electrical conductivity of a shaped product can be even further increased.

### <<Proportional content>>

The proportional content of the CNTs in the CNT dispersion liquid when the entire amount of the CNT dispersion liquid is taken to be 100 mass% is preferably 0.01 mass% or more, and more preferably 0.05 mass% or more, and is preferably 2 mass% or less, more preferably 1 mass% or less, and even more preferably 0.5 mass% or less. When the proportion constituted by the CNTs in the CNT dispersion liquid is 0.01 mass% or more, electrical conductivity of a shaped product can be even further increased, and producibility of a shaped product can be improved. On the other hand, when the proportion constituted by the CNTs in the CNT dispersion liquid is 2 mass% or less, dispersion state stability over time of the CNT dispersion liquid can be further improved.

### <Solvent>

It may be the case that the presently disclosed CNT dispersion liquid contains only water as the solvent, that the presently disclosed CNT dispersion liquid contains only an organic solvent (for example, an ester, a ketone, or an alcohol) as the solvent, or that the presently disclosed CNT dispersion liquid contains a mixture of water and an organic solvent as the solvent. From a viewpoint of further improving dispersion state stability over time of the CNT dispersion liquid while also even further increasing electrical conductivity of a shaped product, it is preferable that the presently disclosed CNT dispersion liquid contains water as the solvent. Note that the presently disclosed CNT dispersion liquid may contain one type of organic solvent or may contain two or more types of organic solvents.

The proportion constituted by water among the solvent in the presently disclosed CNT dispersion liquid when the entire amount of the solvent is taken to be 100 mass% is preferably 70 mass% or more, more preferably 90 mass% or more, even more preferably 99 mass% or more, and particularly preferably 100 mass% (i.e., it is particularly preferable that the presently disclosed CNT dispersion liquid contains only water as the solvent). When the proportion constituted by water among the solvent in the CNT dispersion liquid is not less than any of the lower limits set forth above, dispersion state stability over time of the CNT dispersion liquid can be further improved, and electrical conductivity of a shaped product can be even further increased.

### <Thickener>

Known thickeners can be used as the thickener without any specific limitations. For example, a water-soluble polymer such as a cellulosic polymer, a polycarboxylic acid, polyvinylpyrrolidone, polyvinyl alcohol, polyacrylamide, or polyimide can be used as the thickener.

Note that when a polymer is said to be "water-soluble" in the present disclosure, this means that when 0.5 g (in terms of solid content) of the polymer is dissolved in 100 g of water at a temperature of 25°C, the amount of insoluble content is less than 10.0 mass%.

The cellulosic polymer may be carboxymethyl cellulose, methyl cellulose, hydroxypropyl methylcellulose, hydroxyethyl methylcellulose, or a salt or derivative of any thereof, for example.

The polycarboxylic acid may be polyacrylic acid, polymethacrylic acid, alginic acid, or a salt or derivative of any thereof, for example.

The water-soluble vinyl polymer may be polyvinylpyrrolidone, polyvinyl alcohol, polyvinyl methyl ether, poly(N-vinylacetamide), polyacrylamide, or polyimide, for example.

The aforementioned salt may be an ammonium salt, an alkali metal salt such as a sodium salt, or the like. Moreover, the aforementioned derivative may be an ether, an ester such as an alkyl ester, or the like.

One of the above-described thickeners may be used individually, or two or more of the above-described thickeners may be used in combination in a freely selected ratio. Of these examples, cellulosic polymers, polycarboxylic acids, and polyvinylpyrrolidone are preferable as the thickener from a viewpoint of further improving dispersion state stability over time of the CNT dispersion liquid while also even further increasing electrical conductivity of a shaped product, with carboxymethyl cellulose and salts thereof, polyacrylic acids and salts thereof, and polyvinylpyrrolidone being more preferable.

### <<Weight-average molecular weight>>

The weight-average molecular weight of the thickener is preferably 5,000 or more, and more preferably 10,000 or more, and is preferably 1,000,000 or less, and more preferably 500,000 or less. When the weight-average molecular weight of the thickener is 5,000 or more, dispersibility of the CNTs in the CNT dispersion liquid can be improved. Moreover, when the weight-average molecular weight of the thickener is 1,000,000 or less, an increase of viscosity of the CNT dispersion liquid can be suppressed.

Note that the "weight-average molecular weight" referred to in the present disclosure can be measured as a standard polystyrene-equivalent value by gel permeation chromatography.

### <<Proportional content>>

The proportion in which the thickener is contained in the CNT dispersion liquid when the entire amount of the CNT dispersion liquid is taken to be 100 mass% is preferably 0.1 mass% or more, and more preferably 0.2 mass% or more, and is preferably 10 mass% or less, more preferably 5 mass% or less, even more preferably 2 mass% or less, and particularly preferably 1 mass% or less. When the proportion constituted by the thickener in the CNT dispersion liquid is within any of the ranges set forth above, dispersion state stability over time of the CNT dispersion liquid can be further improved, and electrical conductivity of a shaped product can be even further increased.

The content of the thickener in the CNT dispersion liquid per 100 parts by mass of the CNTs is preferably 100 parts by mass or more, more preferably 200 parts by mass or more, and even more preferably 300 parts by mass or more, and is preferably 500 parts by mass or less, and more preferably 450 parts by mass or less. When the quantitative ratio of the thickener relative to the CNTs in the CNT dispersion liquid is within any of the ranges set forth above, dispersion state stability over time of the CNT dispersion liquid can be further improved, and electrical conductivity of a shaped product can be even further increased.

### <Other components>

Examples of other components that can optionally be contained in the CNT dispersion liquid include conductive materials other than CNTs, polymer components other than the above-described thickener, antioxidants, and resins. Note that the CNT dispersion liquid may contain just one other component or may contain two or more other components.

The proportion in which other components are contained in the CNT dispersion liquid when the entire amount of the CNT dispersion liquid is taken to be 100 mass% is preferably 5 mass% or less, more preferably 1 mass% or less, even more preferably 0.5 mass% or less, further preferably 0.1 mass% or less, and particularly preferably 0 mass% (i.e., it is particularly preferable that the presently disclosed CNT dispersion liquid does not contain other components).

### <Production of CNT dispersion liquid>

The presently disclosed CNT dispersion liquid can be produced by, for example, performing dispersing treatment of a mixture containing the above-described CNTs, solvent, and thickener and also other optional components. The dispersing treatment can be performed using a mixer such as a wet jet mill, a bead mill, a ball mill, a sand mill, a pigment disperser, a grinding machine, an ultrasonic disperser, a homogenizer, a planetary mixer, or a FILMIX, for example, without any specific limitations. In particular, it is preferable that a wet jet mill is used from a viewpoint of further improving dispersion state stability over time of the CNT dispersion liquid while also even further increasing electrical conductivity of a shaped product. The wet jet mill may be a Nanovater^{®} (produced by Yoshida Kikai Co., Ltd.), a BERYU SYSTEM PRO (produced by Beryu Corp.), an ultra-high pressure wet micronization device (produced by Yoshida Kogyo), a NANOMIZER^{®} (produced by NANOMIZER Inc.), a Star Burst^{®} (produced by Sugino Machine Limited), or the like, for example.

A nozzle that is included in the wet jet mill may be a straight nozzle, a cross nozzle, or the like, for example. A straight nozzle has an I-type nozzle cross-section and has comparatively low treatment energy. On the other hand, a cross nozzle has an X-type nozzle cross-section and has high treatment energy compared to a straight nozzle. From a viewpoint of further improving dispersion state stability over time of the CNT dispersion liquid while also even further increasing electrical conductivity of a shaped product, it is preferable to use a straight nozzle as the nozzle of the wet jet mill.

The pressure that is applied in dispersing treatment of the mixture by the wet jet mill is preferably 10 MPa or more, more preferably 15 MPa or more, and even more preferably 20 MPa or more, and is preferably 200 MPa or less, more preferably 150 MPa or less, and even more preferably 100 MPa or less. When the pressure applied to the mixture is 10 MPa or more, dispersion state stability over time of the CNT dispersion liquid can be further improved, and electrical conductivity of an obtained shaped product can be even further increased. Moreover, when the pressure applied to the mixture is 200 MPa or less, electrical conductivity of an obtained shaped product can be even further increased as a result of severing of CNTs by the dispersing treatment being inhibited.

The number of passes of dispersing treatment by the wet jet mill is preferably 10 or more, more preferably 15 or more, and even more preferably 20 or more, and is preferably 100 or less, more preferably 80 or less, and even more preferably 60 or less. When the number of passes of dispersing treatment by the wet jet mill is 10 or more, dispersion state stability over time of the CNT dispersion liquid can be further improved, and electrical conductivity of an obtained shaped product can be even further increased. Moreover, when the number of passes of dispersing treatment by the wet jet mill is 100 or less, electrical conductivity of an obtained shaped product can be even further increased as a result of severing of CNTs by the dispersing treatment being inhibited, and sufficient production efficiency of the CNT dispersion liquid can also be ensured.

### (Third aspect)

The following provides a detailed description of embodiments of the third aspect (CNT dispersion liquid and method of producing same).

A presently disclosed CNT dispersion liquid can be used as a material in production of a shaped product, examples of which include a carbon film and an elastomer shaped product, for example, without any specific limitations. Moreover, the presently disclosed CNT dispersion liquid can be produced using a presently disclosed method of producing a CNT dispersion liquid.

### (Carbon nanotube dispersion liquid)

The presently disclosed CNT dispersion liquid contains at least CNTs, a solvent, and a dispersant and optionally contains components other than the CNTs, solvent, and dispersant (i.e., other components). Note that at least some of the plurality of CNTs are single-walled CNTs and form CNT bundles in the CNT dispersion liquid.

Features of the presently disclosed CNT dispersion liquid are that the average length of CNT bundles is more than 1.5 µm, the average diameter of CNT bundles is less than 15.0 nm, and the number of bundles having a diameter of more than 30.0 nm among 100 CNT bundles is 10 or less.

Note that a CNT bundle is a bundle that is formed as a result of a plurality of CNTs aggregating into the form of a bundle along a major axis direction of the CNTs.

As a result of the presently disclosed CNT dispersion liquid having an average length of CNT bundles of more than a specific value, an average diameter of CNT bundles of less than a specific value, and a number of bundles having a diameter of more than 30.0 nm among 100 CNT bundles of not more than a specific value, it is possible to cause a shaped product to display excellent electrical conductivity by using this CNT dispersion liquid. Although it is not certain why the above-described effect is obtained by using the presently disclosed CNT dispersion liquid, the reason for this is presumed to be as follows.

The inventors decided to focus on CNT bundles formed of a plurality of CNTs in a CNT dispersion liquid with the aim of improving dispersibility of the CNT dispersion liquid. When CNT bundles have a smaller average diameter, the number of CNTs forming each bundle is also smaller. Moreover, when the number of bundles having a diameter of more than 30.0 nm among 100 CNT bundles is smaller, the number of CNT bundles present in a CNT dispersion liquid is larger. Setting the average diameter of CNT bundles as less than 15.0 nm and setting the number of bundles having a diameter of more than 30.0 nm among 100 CNT bundles as 10 or less in the presently disclosed CNT dispersion liquid ensures that a sufficient number of CNT bundles are present in the CNT dispersion liquid. In addition, sufficient length of CNT bundles present in the presently disclosed CNT dispersion liquid is ensured as a result of the presently disclosed CNT dispersion liquid having an average length of CNT bundles of more than 1.5 µm. Moreover, good electrical conduction paths can be formed in a shaped product using a CNT dispersion liquid such as described above due to CNT bundles of sufficient length being distributed in the shaped product.

For the reason described above, use of the presently disclosed CNT dispersion liquid is thought to enable the display of excellent electrical conductivity by a conductive film.

### <CNTs>

No specific limitations are placed on the CNTs so long as they include single-walled CNTs. It may be the case that only single-walled CNTs are used as the CNTs or that single-walled CNTs and multi-walled CNTs are used in combination as the CNTs.

### <<Properties>>

### [Average length of CNT bundles]

The average length of CNT bundles is required to be more than 1.5 µm, and is preferably 1.6 µm or more, more preferably 1.7 µm or more, even more preferably 1.8 µm or more, further preferably 1.9 µm or more, and particularly preferably 2.0 µm or more. In a situation in which the average length of CNT bundles is 1.5 µm or less, electrical conductivity of a shaped product decreases. Moreover, although no specific limitations are placed on the upper limit for the average length of CNT bundles, the average length can be set as 3.5 µm or less, or can be set as 3.0 µm or less, for example.

Note that the average length of CNT bundles in the CNT dispersion liquid can be adjusted by altering the length of feedstock CNTs (CNTs used as a feedstock in production of the CNT dispersion liquid), the type and amount of the dispersant, and the conditions of dispersing treatment, for example. Specifically, increasing the pressure that is applied to a mixture in a dispersing step of the presently disclosed method of producing a CNT dispersion liquid described further below reduces the average length of CNT bundles, whereas reducing the pressure increases the average length. Moreover, increasing the number of passes of dispersing treatment by a wet jet mill reduces the average length of CNT bundles in the CNT dispersion liquid, whereas reducing the number of passes increases the average length.

### [Average diameter of CNT bundles]

The average diameter of CNT bundles is required to be less than 15.0 nm, and is preferably 14.5 nm or less, and more preferably 14.0 nm or less. In a situation in which the average diameter of CNT bundles is 15.0 nm or more, electrical conductivity of an obtained shaped product decreases. Moreover, although no specific limitations are placed on the lower limit for the average diameter of CNT bundles, the average diameter can be set as 12.0 nm or more, or can be set as 12.5 nm or more, for example.

Note that the average diameter of CNT bundles in the CNT dispersion liquid can be adjusted by altering the diameter of feedstock CNTs, the type and amount of the dispersant, and the conditions of dispersing treatment, for example. Specifically, in the presently disclosed method of producing a CNT dispersion liquid described further below, increasing the pressure (pressure applied to a mixture) in dispersing treatment by a wet jet mill reduces the average diameter of CNT bundles, whereas reducing the pressure increases the average diameter. Moreover, increasing the number of passes of dispersing treatment by the wet jet mill reduces the average diameter of CNT bundles in the CNT dispersion liquid, whereas reducing the number of passes increases the average diameter.

### [Number of bundles having diameter of more than 30.0 nm]

The number of bundles having a diameter of more than 30.0 nm is required to be 10 or less, and is preferably 9 or less, more preferably 8 or less, even more preferably 7 or less, further preferably 6 or less, and particularly preferably 5 or less. In a situation in which the number of bundles having a diameter of more than 30.0 nm is more than 10, electrical conductivity of a shaped product decreases. Moreover, although no specific limitations are placed on the lower limit for the number of bundles having a diameter of more than 30.0 nm, the number of bundles having a diameter of more than 30.0 nm can be set as 1 or more, or can be set as 2 or more, for example.

Note that the number of bundles having a diameter of more than 30.0 nm can be adjusted by altering the diameter of feedstock CNTs, the type and amount of the dispersant, and the conditions of dispersing treatment, for example. Specifically, increasing the pressure that is applied to a mixture in a dispersing step of the presently disclosed method of producing a CNT dispersion liquid described further below reduces the number of bundles having a diameter of more than 30.0 nm, whereas reducing the pressure increases the number of bundles having a diameter of more than 30.0 nm. Moreover, increasing the number of passes of dispersing treatment by a wet jet mill reduces the number of bundles having a diameter of more than 30.0 nm, whereas reducing the number of passes increases the number of bundles having a diameter of more than 30.0 nm.

### [Average aspect ratio of CNT bundles]

The average aspect ratio of CNT bundles is preferably more than 120, more preferably 130 or more, even more preferably 140 or more, and particularly preferably 150 or more. When the average aspect ratio of CNT bundles is more than 120, electrical conductivity of a shaped product can be even further increased. Moreover, although no specific limitations are placed on the upper limit for the average aspect ratio of CNT bundles, the average aspect ratio can be set as 250 or less, can be set as 225 or less, or can be set as 200 or less, for example.

### [G/D ratio]

The G/D ratio of the CNTs is preferably 0.5 or more, and more preferably 1 or more, and is preferably 20 or less, and more preferably 10 or less. When the G/D ratio of the CNTs is within any of the ranges set forth above, electrical conductivity of a shaped product can be even further increased.

### [Harmonic mean diameter]

The harmonic mean diameter of the CNTs is preferably more than 500 nm, more preferably 550 nm or more, and even more preferably 600 nm or more. When the harmonic mean diameter of the CNTs is more than 500 nm, electrical conductivity of a shaped product can be even further increased. Moreover, although no specific limitations are placed on the upper limit for the harmonic mean diameter of the CNTs, the harmonic mean diameter can be set as 1,500 nm or less, can be set as 1,250 nm or less, or can be set as 1,000 nm or less, for example.

Note that the harmonic mean diameter of the CNTs can be adjusted by altering the length and diameter of feedstock CNTs, the type and amount of the dispersant, and the conditions of dispersing treatment, for example. Specifically, increasing the pressure that is applied to a mixture in a dispersing step of the presently disclosed method of producing a CNT dispersion liquid described further below reduces the harmonic mean diameter of the CNTs, whereas reducing the pressure increases the harmonic mean diameter. Moreover, increasing the number of passes of dispersing treatment by a wet jet mill reduces the harmonic mean diameter of the CNTs, whereas reducing the number of passes increases the harmonic mean diameter.

### <<Proportional content>>

The proportional content of the CNTs in the CNT dispersion liquid when the entire amount of the CNT dispersion liquid is taken to be 100 mass% is preferably 0.01 mass% or more, more preferably 0.02 mass% or more, and even more preferably 0.05 mass% or more, and is preferably 2 mass% or less, more preferably 1 mass% or less, and even more preferably 0.5 mass% or less. When the proportion constituted by the CNTs in the CNT dispersion liquid is within any of the ranges set forth above, electrical conductivity of a shaped product can be even further increased.

### <Solvent>

It may be the case that the presently disclosed CNT dispersion liquid contains only water as the solvent, that the presently disclosed CNT dispersion liquid contains only an organic solvent (for example, an ester, a ketone, or an alcohol) as the solvent, or that the presently disclosed CNT dispersion liquid contains a mixture of water and an organic solvent as the solvent. From a viewpoint of improving dispersibility of the CNT dispersion liquid and even further increasing electrical conductivity of a shaped product, it is preferable that the presently disclosed CNT dispersion liquid contains water as the solvent. Note that the presently disclosed CNT dispersion liquid may contain one type of organic solvent or may contain two or more types of organic solvents.

The proportion constituted by water among the solvent in the presently disclosed CNT dispersion liquid when the entire amount of the solvent is taken to be 100 mass% is preferably 70 mass% or more, more preferably 90 mass% or more, even more preferably 99 mass% or more, and particularly preferably 100 mass% (i.e., it is particularly preferable that the presently disclosed CNT dispersion liquid contains only water as the solvent). When the proportion constituted by water among the solvent in the CNT dispersion liquid is not less than any of the lower limits set forth above, electrical conductivity of a shaped product can be even further increased.

### <Dispersant>

Any known dispersant that can assist dispersion of the CNTs can be used as the dispersant without any specific limitations. Moreover, a surfactant, a polymer including a carboxy group, or the like, for example, may be used as the dispersant. Note that one dispersant may be used individually, or two or more dispersants may be used in combination in a freely selected ratio.

The surfactant may be an ionic (cationic or anionic) surfactant or a non-ionic surfactant.

The cationic surfactant may be a quaternary ammonium salt such as dodecyltrimethylammonium bromide, cetyltrimethylammonium bromide, or distearyldimethylammonium chloride; a quaternary phosphonium salt such as tetrabutylphosphonium chloride, tetrapentylphosphonium chloride, trioctylmethylphosphonium chloride, or pentyltriphenylphosphonium chloride; or the like, for example.

The anionic surfactant may be sodium dodecyl sulfate, sodium deoxycholate, sodium cholate, sodium dodecylbenzenesulfonate, sodium dodecylbenzene sulfate, sodium dodecyl diphenyl oxide disulfonate, or the like, for example.

The non-ionic surfactant may be an ether-type non-ionic surfactant such as polyoxyethylene alkyl ether; an ether ester-type non-ionic surfactant such as a polyoxyethylene ether of a glycerin ester; a polyethylene glycol fatty acid ester; a glycerin ester; or the like, for example.

Of the surfactants described above, anionic surfactants are preferable from a viewpoint of even further increasing electrical conductivity of a shaped product, with sodium cholate and sodium dodecylbenzene sulfate being more preferable.

The polymer including a carboxy group may be carboxymethyl cellulose or a salt thereof, a copolymer including a carboxy group-containing monomer unit, or the like, for example.

Note that when a polymer is said to "include a monomer unit" in the present disclosure, this means that "a polymer obtained using that monomer includes a repeating unit derived from the monomer".

The copolymer including a carboxy group-containing monomer unit is a copolymer that includes a carboxy group-containing monomer unit and another repeating unit.

Note that a carboxy group included in the carboxy group-containing monomer unit may form a salt with an alkali metal, ammonia, or the like.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

Moreover, an acid anhydride that produces a carboxy group through hydrolysis can also be used as a carboxy group-containing monomer.

Furthermore, an ethylenically unsaturated polybasic carboxylic acid such as butene tricarboxylic acid, a partial ester of an ethylenically unsaturated polybasic carboxylic acid such as monobutyl fumarate or mono-2-hydroxypropyl maleate, or the like can also be used as a carboxy group-containing monomer.

One of the above-described carboxy group-containing monomers may be used individually, or two or more of the above-described carboxy group-containing monomers may be used in combination.

Examples of other repeating units that may be included in the copolymer include, but are not specifically limited to, a conjugated diene monomer unit such as 1,3-butadiene or isoprene (2-methyl-1,3-butadiene); a nitrile group-containing monomer unit such as an acrylonitrile unit or a methacrylonitrile unit; and a (meth)acrylic acid ester monomer unit such as an acrylic acid alkyl ester unit or a methacrylic acid alkyl ester unit. Note that the copolymer may include one type of other repeating unit or may include two or more types of other repeating units. Also note that "(meth)acrylic acid" referred to in the present disclosure means acrylic acid and/or methacrylic acid.

### <<Proportional content>>

The proportion in which the dispersant is contained in the CNT dispersion liquid when the entire amount of the CNT dispersion liquid is taken to be 100 mass% is preferably 0.1 mass% or more, more preferably 0.2 mass% or more, and even more preferably 0.5 mass% or more, and is preferably 10 mass% or less, more preferably 5 mass% or less, and even more preferably 2 mass% or less. When the proportion constituted by the dispersant in the CNT dispersion liquid is within any of the ranges set forth above, electrical conductivity of a shaped product can be even further increased.

### <Other components>

Examples of other components that can optionally be contained in the CNT dispersion liquid include conductive materials other than CNTs, polymer components other than the above-described dispersant, antioxidants, and resins. Note that the CNT dispersion liquid may contain just one other component or may contain two or more other components.

The proportion in which other components are contained in the CNT dispersion liquid when the entire amount of the CNT dispersion liquid is taken to be 100 mass% is preferably 5 mass% or less, more preferably 1 mass% or less, even more preferably 0.5 mass% or less, further preferably 0.1 mass% or less, and particularly preferably 0 mass% (i.e., it is particularly preferable that the presently disclosed CNT dispersion liquid does not contain other components).

### (Production method of CNT dispersion liquid)

The presently disclosed CNT dispersion liquid set forth above can be produced using the presently disclosed method of producing a CNT dispersion liquid, for example. The presently disclosed method of producing a CNT dispersion liquid includes a step (dispersing step) of performing dispersing treatment of a mixture containing a plurality of CNTs, a solvent, and a dispersant using a wet jet mill. Note that the presently disclosed method of producing a CNT dispersion liquid may include steps other than the above-described dispersing step (i.e., other steps).

Through the presently disclosed method of producing a CNT dispersion liquid, it is possible to obtain the presently disclosed CNT dispersion liquid that is capable of forming a shaped product having excellent electrical conductivity.

### <Dispersing step>

In the dispersing step, dispersing treatment is performed with respect to a mixture containing a plurality of CNTs, a solvent, and a dispersant using a wet jet mill. Note that the CNTs, the solvent, and the dispersant can be those that were previously described in the "CNT dispersion liquid" section of the present disclosure.

### <<Wet jet mill>>

Examples of wet jet mills that can be used in the dispersing treatment in the dispersing step include a Nanovater^{®} (produced by Yoshida Kikai Co., Ltd.), a BERYU SYSTEM PRO (produced by Beryu Corp.), an ultra-high pressure wet micronization device (produced by Yoshida Kogyo), a NANOMIZER^{®} (produced by NANOMIZER Inc.), and a Star Burst^{®} (produced by Sugino Machine Limited).

A nozzle that is included in the wet jet mill may be a straight nozzle, a cross nozzle, or the like, for example. A straight nozzle has an I-type nozzle cross-section and has comparatively low treatment energy. On the other hand, a cross nozzle has an X-type nozzle cross-section and has high treatment energy compared to a straight nozzle. From a viewpoint of even further increasing electrical conductivity of a shaped product, it is preferable to use a straight nozzle as the nozzle of the wet jet mill.

### [Pressure]

The pressure that is applied in dispersing treatment of the mixture by the wet jet mill is preferably 10 MPa or more, more preferably 15 MPa or more, and even more preferably 20 MPa or more, and is preferably 50 MPa or less, more preferably 40 MPa or less, and even more preferably 30 MPa or less. When the pressure applied to the mixture is 10 MPa or more, dispersibility of the CNT dispersion liquid can be improved, and electrical conductivity of an obtained shaped product can be even further increased. Moreover, when the pressure applied to the mixture is 50 MPa or less, electrical conductivity of an obtained shaped product can be even further increased as a result of severing of CNTs by the dispersing treatment being inhibited.

### [Number of passes]

The number of passes of dispersing treatment by the wet jet mill is preferably 10 or more, more preferably 15 or more, even more preferably 20 or more, further preferably 25 or more, and particularly preferably 30 or more, and is preferably 50 or less, and more preferably 45 or less. When the number of passes of dispersing treatment by the wet jet mill is 10 or more, dispersibility of the CNT dispersion liquid can be improved, and electrical conductivity of an obtained shaped product can be even further increased. Moreover, when the number of passes of dispersing treatment by the wet jet mill is 50 or less, electrical conductivity of an obtained shaped product can be even further increased as a result of severing of CNTs by the dispersing treatment being inhibited, and sufficient production efficiency of the CNT dispersion liquid can also be ensured.

### <Other steps>

Examples of other steps include a step (mixing step) of mixing the plurality of CNTs, the solvent, and the dispersant to obtain the mixture prior to the dispersing step described above.

### EXAMPLES

The following provides a more specific description of the present disclosure based on examples. However, the present disclosure is not limited to the following examples. In the following description, "%" and "parts" used in expressing quantities are by mass, unless otherwise specified.

The following describes examples and comparative examples (Examples A1 to A21 and Comparative Examples A1 to A7) for the first aspect.

In the examples and comparative examples of the first aspect, various measurements and evaluations were performed using the following methods.

### <Average length, average diameter, and average aspect ratio (SEM)>

A CNT dispersion liquid produced in each example or comparative example was diluted to a CNT concentration of 25 mass ppm with pure water. One drop of the diluted solution that was obtained was dripped onto a wafer using a dropper, and then the wafer was placed on a hot plate heated to 90°C and was baked for 1 minute. The CNT-coated wafer that was obtained was observed using a scanning electron microscope (SEM; produced by Hitachi High-Tech Corporation; product name: SU8200) under conditions of a working distance of 3 mm, an accelerating voltage of 1.0 kV, and a magnification of ×10,000, and a plurality of SEM images including at least 10 CNT bundles in the field of view were acquired. The bundle diameter (external diameter) and length were measured for 100 CNT bundles that were arbitrarily extracted from the acquired SEM images. An arithmetic mean value of the measured diameters of the 100 CNT bundles was taken to be the average diameter (nm) of CNT bundles in the CNT dispersion liquid. Moreover, an arithmetic mean value of the measured lengths of the 100 CNT bundles was taken to be the average length (µm) of CNT bundles in the CNT dispersion liquid. Note that the average aspect ratio was calculated by dividing the average length (nm) by the average diameter (nm).

### <Number of CNT bundles having diameter of more than 30.0 nm>

The diameters (external diameters) of 100 CNT bundles were measured using an SEM as described above, and an evaluation was made by the following standard.
A: Number of bundles having a diameter of more than 30.0 nm is 10 or less
B: Number of bundles having a diameter of more than 30.0 nm is not less than 11 and not more than 15
C: Number of bundles having a diameter of more than 30.0 nm is 16 or more

### <Average length (optical microscope)>

A CNT dispersion liquid produced in each example or comparative example was diluted to 0.02% with pure water. One drop of the diluted solution that was obtained was dripped onto a glass slide using a dropper, was sandwiched between glass slides, and was observed at ×700 magnification using a digital microscope (produced by Keyence Corporation; product name: VHX-7000). The lengths of all CNT bundles observed in one field of view were measured, an arithmetic mean value of the lengths was taken to be the average length (µm) of CNT bundles, and the average length was evaluated by the following standard.
A: Average length of 15.0 µm or more
B: Average length of not less than 8.0 µm and less than 15.0 µm
C: Average length of less than 8.0 µm

### <G/D ratio>

A microscopic laser Raman spectrophotometer (produced by Thermo Fisher Scientific; product name: Nicolet Almega XR) was used to measure a Raman spectrum of CNTs used in each example or comparative example. In the obtained Raman spectrum, the intensity of a G band peak observed near 1590 cm⁻¹ and the intensity of a D band peak observed near 1340 cm⁻¹ were determined, and the G/D ratio was calculated.

### <Dispersion state stability over time>

In a case in which "Rate of particle diameter change" and "Rate of viscosity change" described below are both evaluated as A or B, this means that a CNT dispersion liquid has excellent dispersion state stability over time.

### [Rate of particle diameter change]

With respect to a CNT dispersion liquid obtained in each example or comparative example, a value of the average particle diameter (D50) straight after production and a value of the average particle diameter (D50) at 10 days after production were each measured. The average particle diameter (D50) was determined by using a laser diffraction/scattering particle size analyzer (produced by Horiba; product name Partica: LA-960V2) to measure a water dispersion that had been diluted to a CNT concentration of 0.04% with water, and taking the particle diameter at which cumulative volume calculated from a small diameter end of the obtained particle size distribution (by volume) reached 50% to be the average particle diameter (µm). The measurement conditions were as indicated below.
- Circulation speed: 3, Ultrasound strength: 7, Ultrasound time: 1 min, Stirring speed: 1, Stirring mode: Continuous (circulation/ultrasound operating conditions)
- Ultrasound strength: 7, Ultrasound time: 5 s (ultrasound operation during deaeration)
- Refractive index of water: 1.333
- Refractive index of carbon material: 1.92

Next, the value of the average particle diameter (D50) straight after production was taken to be d₀ (µm), the value of the average particle diameter (D50) at 10 days after production was taken to be d₁ (µm), and the rate of particle diameter change (%) was calculated by rate of particle diameter change (%) = [(d₁ - d₀)/d₀] × 100 and was evaluated by the following standard. A smaller value for the rate of particle diameter change indicates that the dispersion state of CNTs does not readily change (i.e., that dispersion state stability over time is excellent).
A: Rate of particle diameter change of less than 1%
B: Rate of particle diameter change of not less than 1% and less than 30%
C: Rate of particle diameter change of 30% or more

### [Rate of viscosity change]

With respect to a CNT dispersion liquid obtained in each example or comparative example, a value of the viscosity straight after production and a value of the viscosity at 10 days after production were each measured. Each viscosity measurement was performed at a temperature of 20°C using a rheometer (produced by Anton Paar; product name: MCR-102). Specifically, a cone plate was used as a measurement jig, measurement was performed in a shear rate range of 100 to 9,000 (1/s), and the viscosity (mPa·s) at a shear rate of 1,000 (1/s) was determined. Next, the value of the viscosity straight after production was taken to be η₀ (mPa·s), the value of the viscosity at 10 days after production was taken to be η₁ (mPa·s), and the rate of viscosity change (%) was calculated by rate of viscosity change (%) = [(η₁ - η₀)/η₀] × 100 and was evaluated by the following standard. A smaller value for the rate of viscosity change indicates that the CNT dispersion liquid does not readily thicken over time (i.e., has excellent dispersion state stability over time).
A: Rate of viscosity change of less than 10%
B: Rate of viscosity change of not less than 10% and less than 20%
C: Rate of viscosity change of 20% or more

### <Volume conductivity>

The volume conductivity (S/cm) of a carbon film (shaped product) produced in each example or comparative example was measured in accordance with JIS K 7194 using a low resistivity meter (produced by Mitsubishi Chemical Analytech Co., Ltd.; product name: Loresta GX) and was evaluated by the following standard. A higher value for this volume conductivity indicates that the carbon film (shaped product) has better electrical conductivity.
A: Volume conductivity value of 100 S/cm or more
B: Volume conductivity value of not less than 50 S/cm and less than 100 S/cm
C: Volume conductivity value of less than 50 S/cm

### (Example A1)

### <Production of CNT dispersion liquid>

### [Synthesis of CNTs]

Single-walled CNTs (hereinafter, referred to as "CNT-a") were produced according to a method disclosed in Example 4 of WO2022/114237A1. The characteristics of the obtained CNT-a were a G/D ratio of 1.2, a tapped bulk density of 0.02 g/cm³, a CNT average length of 150 µm, a BET specific surface area of 600 m²/g, an average external diameter of 4.0 nm, and a carbon purity of 99.0 mass%.

### [Production of CNT dispersion liquid]

A mixture (single-walled CNT concentration: 0.4%) was obtained by adding 1.2 g of CNT-a (G/D ratio: 1.2) obtained as described above as single-walled CNTs to 300 mL of an aqueous solution (carboxymethyl cellulose sodium salt concentration: 0.4%) containing carboxymethyl cellulose sodium salt (produced by Tokyo Chemical Industry Co., Ltd.; product code: C0045; average degree of polymerization: 500) as a thickener in water serving as a solvent. This mixture was subjected to dispersing treatment using a wet jet mill (produced by Yoshida Kikai Co., Ltd.; model number: NVL-ES008A-D10; product name: Nanovater^{®}) under conditions of a pressure of 50 MPa and a number of passes of 40. Specifically, back pressure was applied while imparting shear force to the mixture so as to disperse the single-walled CNTs and obtain a CNT dispersion liquid. The average length, average diameter, and average aspect ratio of CNT bundles and number of CNT bundles having a diameter of more than 30.0 nm upon observation using an SEM, the average length of CNT bundles upon observation using an optical microscope, and the rate of particle diameter change and rate of viscosity change were measured for the obtained CNT dispersion liquid. The results are shown in Table 1.

### <Production of carbon film (shaped product)>

The CNT dispersion liquid produced as described above was filtered using a vacuum filtration device including a membrane filter under a condition of 0.09 MPa. After the end of filtration, isopropyl alcohol and water were passed through the vacuum filtration device to wash a carbon film that had formed on the membrane filter, and then air was passed through the vacuum filtration device for 15 minutes. Next, the carbon film/membrane filter was immersed in ethanol, and then the carbon film was peeled from the membrane filter to obtain the carbon film as a shaped product. The obtained carbon film was of a similar size to the membrane filter and had excellent film formation properties. Moreover, the carbon film maintained the state of a film even after peeling from the filter and had excellent free-standing ability. The volume conductivity of this carbon film was measured. The result is shown in Table 1.

### (Examples A2 to A8 and Comparative Examples A1 to A6)

Production of a CNT dispersion liquid and production of a carbon film were performed in the same way as in Example A1 with the exception that in production of the CNT dispersion liquid, the pressure and number of passes of dispersing treatment by the wet jet mill were changed as indicated in Tables 1 and 3. Evaluations were conducted in the same manner as in Example A1. The results are shown in Tables 1 and 3.

### (Examples A9 to A11)

Synthesis of CNTs, production of a CNT dispersion liquid, and production of a carbon film were performed in the same way as in Example A1 with the exception that in production of the CNT dispersion liquid, the concentration of the carboxymethyl cellulose sodium salt aqueous solution was changed from 0.4% to 0.8%, and the pressure and number of passes of dispersing treatment by the wet jet mill were changed as indicated in Table 1. Evaluations were conducted in the same manner as in Example A1. The results are shown in Table 1.

### (Examples A12 to A14)

Synthesis of CNTs, production of a CNT dispersion liquid, and production of a carbon film were performed in the same way as in Example A1 with the exception that in production of the CNT dispersion liquid, the concentration of the carboxymethyl cellulose sodium salt aqueous solution was changed from 0.4% to 1.2%, and the pressure and number of passes of dispersing treatment by the wet jet mill were changed as indicated in Table 2. Evaluations were conducted in the same manner as in Example A1. The results are shown in Table 2.

### (Example A15)

Synthesis of CNTs, production of a CNT dispersion liquid, and production of a carbon film were performed in the same way as in Example A1 with the exception that in production of the CNT dispersion liquid, sodium polyacrylate (produced by FUJIFILM Wako Pure Chemical Corporation; product code: 196-02955; degree of polymerization: 22,000 to 70,000) was used instead of carboxymethyl cellulose sodium salt as a thickener. Evaluations were conducted in the same manner as in Example A1. The results are shown in Table 2.

### (Example A16)

Synthesis of CNTs, production of a CNT dispersion liquid, and production of a carbon film were performed in the same way as in Example A1 with the exception that in production of the CNT dispersion liquid, polyvinylpyrrolidone (produced by Nippon Shokubai Co., Ltd.; product name: Polyvinylpyrrolidone K-30; HLB value: 15) was used instead of carboxymethyl cellulose sodium salt as a thickener. Evaluations were conducted in the same manner as in Example A1. The results are shown in Table 2.

### (Example A17)

Production of a CNT dispersion liquid and production of a carbon film were performed in the same way as in Example A1 with the exception that in production of the CNT dispersion liquid, CNT-b (produced by Zeon Corporation; product name: ZEONANO^{®} SG101 (ZEONANO is a registered trademark in Japan, other countries, or both); G/D ratio: 5.0) was used instead of CNT-a as single-walled CNTs, and the pressure and number of passes of dispersing treatment by the wet jet mill were changed as indicated in Table 2. Evaluations were conducted in the same manner as in Example A1. The results are shown in Table 2.

### (Examples A18 and A19)

Production of a CNT dispersion liquid and production of a carbon film were performed in the same way as in Example A1 with the exception that in production of the CNT dispersion liquid, CNT-c (produced by OCSiAl; product name: Tuball^{®} (Tuball is a registered trademark in Japan, other countries, or both); G/D ratio: 109) was used instead of CNT-a as single-walled CNTs, and the pressure and number of passes of dispersing treatment by the wet jet mill were changed as indicated in Table 2. Evaluations were conducted in the same manner as in Example A1. The results are shown in Table 2.

### (Examples A20 and A21)

Production of a CNT dispersion liquid and production of a carbon film were performed in the same way as in Example A1 with the exception that in production of the CNT dispersion liquid, CNT-d (produced by Meijo Nano Carbon; product name: MEIJO eDIPS^{®} (MEIJO eDIPS is a registered trademark in Japan, other countries, or both); G/D ratio: 119) was used instead of CNT-a as single-walled CNTs, and the pressure and number of passes of dispersing treatment by the wet jet mill were changed as indicated in Table 2. Evaluations were conducted in the same manner as in Example A1. The results are shown in Table 2.

### (Comparative Example A7)

Synthesis of CNTs, production of a CNT dispersion liquid, and production of a carbon film were performed in the same way as in Example A1 with the exception that in production of the CNT dispersion liquid, the used amount of CNT-a was changed from 1.2 g to 0.3 g. Evaluations were conducted in the same manner as in Example A1. The results are shown in Table 3. Note that there was a remarkable decrease of dispersibility of the CNTs in the CNT dispersion liquid, and thus measurement of the average length and average diameter of CNT bundles could not be performed upon observation using an SEM.

The following describes examples and comparative examples (Examples B1 to B19 and Comparative Examples B1 to B8) for the second aspect.

In the examples and comparative examples of the second aspect, various measurements and evaluations were performed using the following methods.

### <Average length, average diameter, and average aspect ratio>

A CNT dispersion liquid produced in each example or comparative example was diluted to a CNT concentration of 25 mass ppm with pure water. One drop of the diluted solution that was obtained was dripped onto a wafer using a dropper, and then the wafer was placed on a hot plate heated to 90°C and was baked for 1 minute. The CNT-coated wafer that was obtained was observed using a scanning electron microscope (SEM; produced by Hitachi High-Tech Corporation; product name: SU8200) under conditions of a working distance of 3 mm, an accelerating voltage of 1.0 kV, and a magnification of ×10,000, and a plurality of SEM images including at least 10 CNT bundles in the field of view were acquired. The bundle diameter (external diameter) and length were measured for 100 CNT bundles that were arbitrarily extracted from the acquired SEM images. An arithmetic mean value of the measured diameters of the 100 CNT bundles was taken to be the average diameter (nm) of CNT bundles in the CNT dispersion liquid. Moreover, an arithmetic mean value of the measured lengths of the 100 CNT bundles was taken to be the average length (µm) of CNT bundles in the CNT dispersion liquid. Note that the average aspect ratio was calculated by dividing the average length (nm) by the average diameter (nm).

### <Number of CNT bundles having diameter of more than 30.0 nm>

The diameters (external diameters) of 100 CNT bundles were measured as described above, and an evaluation was made by the following standard.
A: Number of bundles having a diameter of more than 30.0 nm is 10 or less
B: Number of bundles having a diameter of more than 30.0 nm is not less than 11 and not more than 15
C: Number of bundles having a diameter of more than 30.0 nm is 16 or more

### <G/D ratio>

A microscopic laser Raman spectrophotometer (produced by Thermo Fisher Scientific; product name: Nicolet Almega XR) was used to measure a Raman spectrum of CNTs used in each example or comparative example. In the obtained Raman spectrum, the intensity of a G band peak observed near 1590 cm⁻¹ and the intensity of a D band peak observed near 1340 cm⁻¹ were determined, and the G/D ratio was calculated.

### <Dispersion state stability over time>

In a case in which "Rate of particle diameter change" and "Rate of viscosity change" described below are both evaluated as A or B, this means that a CNT dispersion liquid has excellent dispersion state stability over time.

### [Rate of particle diameter change]

With respect to a CNT dispersion liquid obtained in each example or comparative example, a value of the average particle diameter (D50) straight after production and a value of the average particle diameter (D50) at 10 days after production were each measured. The average particle diameter (D50) was determined by using a laser diffraction/scattering particle size analyzer (produced by Horiba; product name Partica: LA-960V2) to measure a water dispersion that had been diluted to a CNT concentration of 0.04% with water, and taking the particle diameter at which cumulative volume calculated from a small diameter end of the obtained particle size distribution (by volume) reached 50% to be the average particle diameter (µm). The measurement conditions were as indicated below.
- Circulation speed: 3, Ultrasound strength: 7, Ultrasound time: 1 min, Stirring speed: 1, Stirring mode: Continuous (circulation/ultrasound operating conditions)
- Ultrasound strength: 7, Ultrasound time: 5 s (ultrasound operation during deaeration)
- Refractive index of water: 1.333
- Refractive index of carbon material: 1.92

Next, the value of the average particle diameter (D50) straight after production was taken to be d₀ (µm), the value of the average particle diameter (D50) at 10 days after production was taken to be d₁ (µm), and the rate of particle diameter change (%) was calculated by rate of particle diameter change (%) = [(d₁ - d₀)/d₀] × 100 and was evaluated by the following standard. A smaller value for the rate of particle diameter change indicates that the dispersion state of CNTs does not readily change (i.e., that dispersion state stability over time is excellent).
A: Rate of particle diameter change of less than 1%
B: Rate of particle diameter change of not less than 1% and less than 30%
C: Rate of particle diameter change of 30% or more

### [Rate of viscosity change]

With respect to a CNT dispersion liquid obtained in each example or comparative example, a value of the viscosity straight after production and a value of the viscosity at 10 days after production were each measured. Each viscosity measurement was performed at a temperature of 20°C using a rheometer (produced by Anton Paar; product name: MCR-102). Specifically, a cone plate was used as a measurement jig, measurement was performed in a shear rate range of 100 to 9,000 (1/s), and the viscosity (mPa·s) at a shear rate of 1,000 (1/s) was determined. Next, the value of the viscosity straight after production was taken to be η₀ (mPa·s), the value of the viscosity at 10 days after production was taken to be η₁ (mPa·s), and the rate of viscosity change (%) was calculated by rate of viscosity change (%) = [(η₁ - η₀)/η₀] × 100 and was evaluated by the following standard. A smaller value for the rate of viscosity change indicates that the CNT dispersion liquid does not readily thicken over time (i.e., has excellent dispersion state stability over time).
A: Rate of viscosity change of less than 10%
B: Rate of viscosity change of not less than 10% and less than 20%
C: Rate of viscosity change of 20% or more

### <Volume conductivity>

The volume conductivity (S/cm) of a carbon film (shaped product) produced in each example or comparative example was measured in accordance with JIS K 7194 using a low resistivity meter (produced by Mitsubishi Chemical Analytech Co., Ltd.; product name: Loresta GX) and was evaluated by the following standard. A higher value for this volume conductivity indicates that the carbon film (shaped product) has better electrical conductivity.
A: Volume conductivity value of 100 S/cm or more
B: Volume conductivity value of not less than 50 S/cm and less than 100 S/cm
C: Volume conductivity value of less than 50 S/cm

### (Example B1)

### <Production of CNT dispersion liquid>

### [Synthesis of CNTs]

Single-walled CNTs (hereinafter, referred to as "CNT-a") were produced according to a method disclosed in Example 4 of WO2022/114237A1. The characteristics of the obtained CNT-a were a G/D ratio of 1.2, a tapped bulk density of 0.02 g/cm³, a CNT average length of 150 µm, a BET specific surface area of 600 m²/g, an average external diameter of 4.0 nm, and a carbon purity of 99.0 mass%.

### [Production of CNT dispersion liquid]

A mixture (single-walled CNT concentration: 0.1%) was obtained by adding 0.3 g of CNT-a (G/D ratio: 1.2) obtained as described above as single-walled CNTs to 300 mL of an aqueous solution (carboxymethyl cellulose sodium salt concentration: 0.4%) containing carboxymethyl cellulose sodium salt (produced by Tokyo Chemical Industry Co., Ltd.; product code: C0045; average degree of polymerization: 500) as a thickener in water serving as a solvent. This mixture was subjected to dispersing treatment using a wet jet mill (produced by Yoshida Kikai Co., Ltd.; model number: NVL-ES008A-D10; product name: Nanovater^{®}) under conditions of a pressure of 25 MPa and a number of passes of 40. Specifically, back pressure was applied while imparting shear force to the mixture so as to disperse the single-walled CNTs and obtain a CNT dispersion liquid. The average length, average diameter, and average aspect ratio of CNT bundles, the number of CNT bundles having a diameter of more than 30.0 nm, and the rate of particle diameter change and rate of viscosity change were measured for the obtained CNT dispersion liquid. The results are shown in Table 4.

### <Production of carbon film (shaped product)>

The CNT dispersion liquid produced as described above was filtered using a vacuum filtration device including a membrane filter under a condition of 0.09 MPa. After the end of filtration, isopropyl alcohol and water were passed through the vacuum filtration device to wash a carbon film that had formed on the membrane filter, and then air was passed through the vacuum filtration device for 15 minutes. Next, the carbon film/membrane filter was immersed in ethanol, and then the carbon film was peeled from the membrane filter to obtain the carbon film as a shaped product. The obtained carbon film was of a similar size to the membrane filter and had excellent film formation properties. Moreover, the carbon film maintained the state of a film even after peeling from the filter and had excellent free-standing ability. The volume conductivity of this carbon film was measured. The result is shown in Table 4.

### (Examples B2 to B11 and Comparative Examples B1 to B8)

Production of a CNT dispersion liquid and production of a carbon film were performed in the same way as in Example B1 with the exception that in production of the CNT dispersion liquid, the pressure and number of passes of dispersing treatment by the wet jet mill were changed as indicated in Tables 4 to 6. Evaluations were conducted in the same manner as in Example B1. The results are shown in Tables 4 to 6. Note that in Comparative Example B8, there was a remarkable decrease of dispersibility of the CNTs in the CNT dispersion liquid, and thus the average length and average diameter of CNT bundles could not be measured.

### (Example B12)

Production of a CNT dispersion liquid and production of a carbon film were performed in the same way as in Example B1 with the exception that in production of the CNT dispersion liquid, CNT-b (produced by Zeon Corporation; product name: ZEONANO^{®} SG101; G/D ratio: 5.0) was used instead of CNT-a as single-walled CNTs, and the pressure and number of passes of dispersing treatment by the wet jet mill were changed as indicated in Table 5. Evaluations were conducted in the same manner as in Example B1. The results are shown in Table 5.

### (Example B13)

Synthesis of CNTs, production of a CNT dispersion liquid, and production of a carbon film were performed in the same way as in Example B1 with the exception that in production of the CNT dispersion liquid, sodium polyacrylate (produced by FUJIFILM Wako Pure Chemical Corporation; product code: 196-02955; degree of polymerization: 22,000 to 70,000) was used instead of carboxymethyl cellulose sodium salt as a thickener, and the pressure and number of passes of dispersing treatment by the wet jet mill were changed as indicated in Table 5. Evaluations were conducted in the same manner as in Example B1. The results are shown in Table 5.

### (Example B14)

Synthesis of CNTs, production of a CNT dispersion liquid, and production of a carbon film were performed in the same way as in Example B1 with the exception that in production of the CNT dispersion liquid, polyvinylpyrrolidone (produced by Nippon Shokubai Co., Ltd.; product name: Polyvinylpyrrolidone K-30; HLB value: 15) was used instead of carboxymethyl cellulose sodium salt as a thickener, and the pressure and number of passes of dispersing treatment by the wet jet mill were changed as indicated in Table 5. Evaluations were conducted in the same manner as in Example B1. The results are shown in Table 5.

### (Examples B15 to B17)

Production of a CNT dispersion liquid and production of a carbon film were performed in the same way as in Example B1 with the exception that in production of the CNT dispersion liquid, CNT-c (produced by OCSiAl; product name: Tuball^{®}; G/D ratio: 109) was used instead of CNT-a as single-walled CNTs, and the pressure and number of passes of dispersing treatment by the wet jet mill were changed as indicated in Table 5. Evaluations were conducted in the same manner as in Example B1. The results are shown in Table 5.

### (Examples B18 and B19)

Production of a CNT dispersion liquid and production of a carbon film were performed in the same way as in Example B1 with the exception that in production of the CNT dispersion liquid, CNT-d (produced by Meijo Nano Carbon; product name: MEIJO eDIPS^{®}; G/D ratio: 119) was used instead of CNT-a as single-walled CNTs, and the pressure and number of passes of dispersing treatment by the wet jet mill were changed as indicated in Tables 5 and 6. Evaluations were conducted in the same manner as in Example B1. The results are shown in Tables 5 and 6.

The following describes examples and comparative examples (Examples C1 to C22 and Comparative Examples C1 to C25) for the third aspect.

In the examples and comparative examples of the third aspect, various measurements and evaluations were performed using the following methods.

### <Average length, average diameter, and average aspect ratio>

A CNT dispersion liquid produced in each example or comparative example was diluted to a single-walled CNT concentration of 25 mass ppm with a 1% sodium cholate aqueous solution. One drop of the diluted solution that was obtained was dripped onto a wafer using a dropper, and then the wafer was placed on a hot plate heated to 90°C and was baked for 1 minute. The CNT-coated wafer that was obtained was observed using a scanning electron microscope (SEM; produced by Hitachi High-Tech Corporation; product name: SU8200) under conditions of a working distance of 3 mm, an accelerating voltage of 1.0 kV, and a magnification of ×10,000, and a plurality of SEM images including at least 10 CNTs in the field of view were acquired. The bundle diameter (external diameter) and length were measured for 100 CNT bundles that were arbitrarily extracted from the acquired SEM images. An arithmetic mean value of the measured diameters of the 100 CNT bundles was taken to be the average diameter (nm) of CNT bundles in the CNT dispersion liquid. Moreover, an arithmetic mean value of the measured lengths of the 100 CNT bundles was taken to be the average length (µm) of CNT bundles in the CNT dispersion liquid. Note that the average aspect ratio was calculated by dividing the average length (nm) by the average diameter (nm).

### <Number of bundles having diameter of more than 30.0 nm>

The diameters (external diameters) of 100 CNT bundles were measured as described above, and an evaluation was made by the following standard.
A: Number of bundles having a diameter of more than 30.0 nm is 5 or less
B: Number of bundles having a diameter of more than 30.0 nm is not less than 6 and not more than 10
C: Number of bundles having a diameter of more than 30.0 nm is 11 or more

### <G/D ratio>

A microscopic laser Raman spectrophotometer (produced by Thermo Fisher Scientific; product name: Nicolet Almega XR) was used to measure a Raman spectrum of CNTs used in each example or comparative example. In the obtained Raman spectrum, the intensity of a G band peak observed near 1590 cm⁻¹ and the intensity of a D band peak observed near 1340 cm⁻¹ were determined, and the G/D ratio was calculated.

### <Harmonic mean diameter>

A CNT dispersion liquid produced in each example or comparative example was diluted to a single-walled CNT concentration of 10 mass ppm with a 1% sodium cholate aqueous solution. The diluted solution that was obtained was measured using a Zetasizer Nano (produced by Malvern Panalytical Ltd.; product name: Nano ZS) under conditions of a temperature of 25°C, a scan count of 3, and a scan time of 60 s, and the harmonic mean diameter (z-average diameter) was determined.

### <Volume conductivity>

The volume conductivity (S/cm) of a carbon film (shaped product) produced in each example or comparative example was measured in accordance with JIS K 7194 using a low resistivity meter (produced by Mitsubishi Chemical Analytech Co., Ltd.; product name: Loresta GX). A higher value for this volume conductivity indicates that the carbon film (shaped product) has better electrical conductivity.

### (Example C1)

### <Production of CNT dispersion liquid>

A mixture (single-walled CNT concentration: 0.1%) was obtained by adding 0.3 g of single-walled CNTs (produced by Zeon Corporation; product name: ZEONANO^{®} SG101; G/D ratio: 5.0; hereinafter referred to as "CNT-a") to 300 mL of sodium cholate aqueous solution (sodium cholate concentration: 1%) containing sodium cholate as a dispersant in water serving as a solvent. This mixture was subjected to dispersing treatment using a wet jet mill (produced by Yoshida Kikai Co., Ltd.; model number: NVL-ES008A-D10; product name: Nanovater^{®}) under conditions of a pressure of 25 MPa and a number of passes of 5. Specifically, back pressure was applied while imparting shear force to the mixture so as to disperse the single-walled CNTs and obtained a CNT dispersion liquid. The average length, average diameter, and average aspect ratio of CNT bundles in the obtained CNT dispersion liquid, the number of bundles having a diameter of more than 30.0 nm, and the harmonic mean diameter were measured. The results are shown in Table 7.

### <Production of carbon film (shaped product)>

The CNT dispersion liquid produced as described above was filtered using a vacuum filtration device including a membrane filter under a condition of 0.09 MPa. After the end of filtration, isopropyl alcohol and water were passed through the vacuum filtration device to wash a carbon film that had formed on the membrane filter, and then air was passed through the vacuum filtration device for 15 minutes. Next, the carbon film/membrane filter was immersed in ethanol, and then the carbon film was peeled from the membrane filter to obtain the carbon film as a shaped product. The obtained carbon film was of a similar size to the membrane filter and had excellent film formation properties. Moreover, the carbon film maintained the state of a film even after peeling from the filter and had excellent free-standing ability. The conductivity of this carbon film was measured. The result is shown in Table 7.

### (Examples C2 to C9)

Production of a CNT dispersion liquid and production of a carbon film were performed in the same way as in Example C1 with the exception that in production of the CNT dispersion liquid, the pressure and number of passes of dispersing treatment by the wet jet mill were changed as indicated in Table 7. Evaluations were conducted in the same manner as in Example C1. The results are shown in Table 7.

### (Example C10)

Production of a CNT dispersion liquid and production of a carbon film were performed in the same way as in Example C1 with the exception that in production of the CNT dispersion liquid, CNT-b (single-walled CNTs; G/D ratio: 1.2) was used instead of CNT-a as single-walled CNTs, and the number of passes of dispersing treatment by the wet jet mill was changed from 5 to 10. Evaluations were conducted in the same manner as in Example C1. The results are shown in Table 7.

### (Examples C11 to C21)

Production of a CNT dispersion liquid and production of a carbon film were performed in the same way as in Example C10 with the exception that in production of the CNT dispersion liquid, the pressure and number of passes of dispersing treatment by the wet jet mill were changed as indicated in Tables 7 and 8. Evaluations were conducted in the same manner as in Example C1. The results are shown in Tables 7 and 8.

### (Example C22)

Production of a CNT dispersion liquid and production of a carbon film were performed in the same way as in Example C10 with the exception that in production of the CNT dispersion liquid, sodium dodecylbenzene sulfate was used instead of sodium cholate as a dispersant, and the number of passes of dispersing treatment by the wet jet mill was changed from 10 to 40. Evaluations were conducted in the same manner as in Example C1. The results are shown in Table 8.

### (Comparative Examples C1 to C8)

Production of a CNT dispersion liquid and production of a carbon film were performed in the same way as in Example C1 with the exception that in production of the CNT dispersion liquid, the pressure and number of passes of dispersing treatment by the wet jet mill were changed as indicated in Tables 8 and 9. Evaluations were conducted in the same manner as in Example C1. The results are shown in Tables 8 and 9.

### (Comparative Examples C9 to C15)

Production of a CNT dispersion liquid and production of a carbon film were performed in the same way as in Example C10 with the exception that in production of the CNT dispersion liquid, the pressure and number of passes of dispersing treatment by the wet jet mill were changed as indicated in Tables 9 and 10. Evaluations were conducted in the same manner as in Example C1. The results are shown in Tables 9 and 10.

### (Comparative Example C16)

A carbon film was produced in the same way as in Example C1 with the exception that a CNT dispersion liquid that was produced as described below was used. Evaluations were conducted in the same manner as in Example C1. The results are shown in Table 10.

### <Production of CNT dispersion liquid>

A mixture (single-walled CNT concentration: 0.1%) was obtained by adding 0.025 g of CNT-a as single-walled CNTs to 25 mL of sodium cholate aqueous solution (sodium cholate concentration: 1%) containing sodium cholate as a dispersant in water serving as a solvent. This mixture was subjected to dispersing treatment using an ultrasonic device (produced by Thinky Corporation; product name: Nano Premixer) under conditions of a power of 140 W and a treatment time of 40 minutes to obtain a CNT dispersion liquid.

### (Comparative Examples C17 to C19)

Production of a CNT dispersion liquid and production of a carbon film were performed in the same way as in Comparative Example C16 with the exception that in production of the CNT dispersion liquid, the treatment time of ultrasonic treatment was changed as indicated in Table 10. Evaluations were conducted in the same manner as in Example C1. The results are shown in Table 10.

### (Comparative Example C20)

Production of a CNT dispersion liquid and production of a carbon film were performed in the same way as in Comparative Example C16 with the exception that in production of the CNT dispersion liquid, CNT-b was used instead of CNT-a as single-walled CNTs. Evaluations were conducted in the same manner as in Example C1. The results are shown in Table 10.

### (Comparative Examples C21 to C23)

Production of a CNT dispersion liquid and production of a carbon film were performed in the same way as in Comparative Example C20 with the exception that in production of the CNT dispersion liquid, the treatment time of ultrasonic treatment was changed as indicated in Table 10. Evaluations were conducted in the same manner as in Example C1. The results are shown in Table 10.

### (Comparative Example C24)

Production of a CNT dispersion liquid and production of a carbon film were performed in the same way as in Example C1 with the exception that in production of the CNT dispersion liquid, sodium cholate was not used as a dispersant, and the number of passes of dispersing treatment by the wet jet mill was changed from 5 to 40. Evaluations were conducted in the same manner as in Example C1. The results are shown in Table 10. Note that the harmonic mean diameter of the CNTs could not be measured.

### (Comparative Example C25)

Production of a CNT dispersion liquid and production of a carbon film were performed in the same way as in Example C10 with the exception that in production of the CNT dispersion liquid, sodium cholate was not used as a dispersant, and the number of passes of dispersing treatment by the wet jet mill was changed from 10 to 40. Evaluations were conducted in the same manner as in Example C1. The results are shown in Table 10. Note that the harmonic mean diameter of the CNTs could not be measured.

In Tables 1 to 10, shown below:
"SEM" indicates scanning electron microscope;
"OM" indicates optical microscope;
"Single-walled" indicates single-walled CNTs;
"CMC" indicates carboxymethyl cellulose sodium salt;
"SC" indicates sodium cholate;
"SDBS" indicates sodium dodecylbenzene sulfate;
"PAA" indicates sodium polyacrylate;
"PVP" indicates polyvinylpyrrolidone;
"Jet mill" indicates wet jet mill;
"Ultrasonic" indicates ultrasonic treatment;
"Number of CNT bundles having diameter of more than 30 nm" indicates number of CNT bundles having diameter of more than 30.0 nm among 100 CNT bundles;
"A" indicates 5 bundles or less;
"B" indicates not less than 6 bundles and not more than 10 bundles; and
"C" indicates 11 bundles or more
Also note that "Average aspect ratio of CNT bundles" is expressed as a value that has been rounded at the first decimal place.

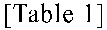

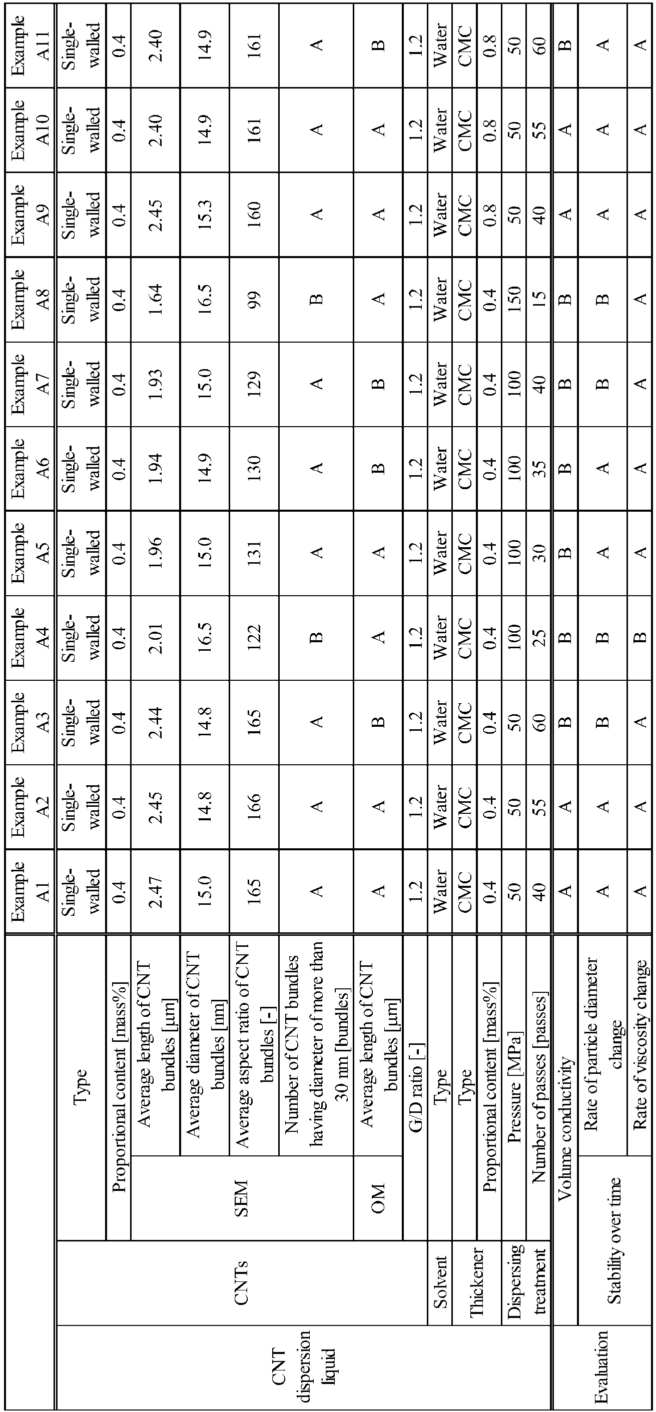

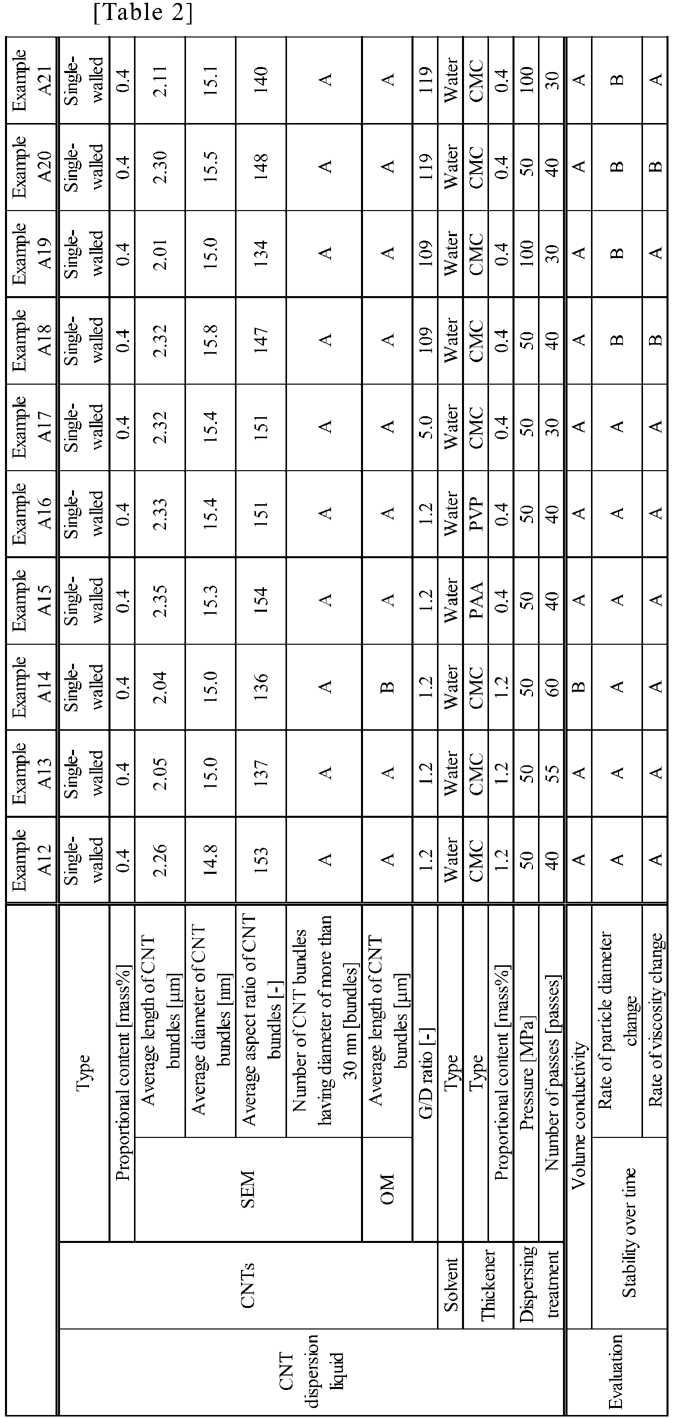

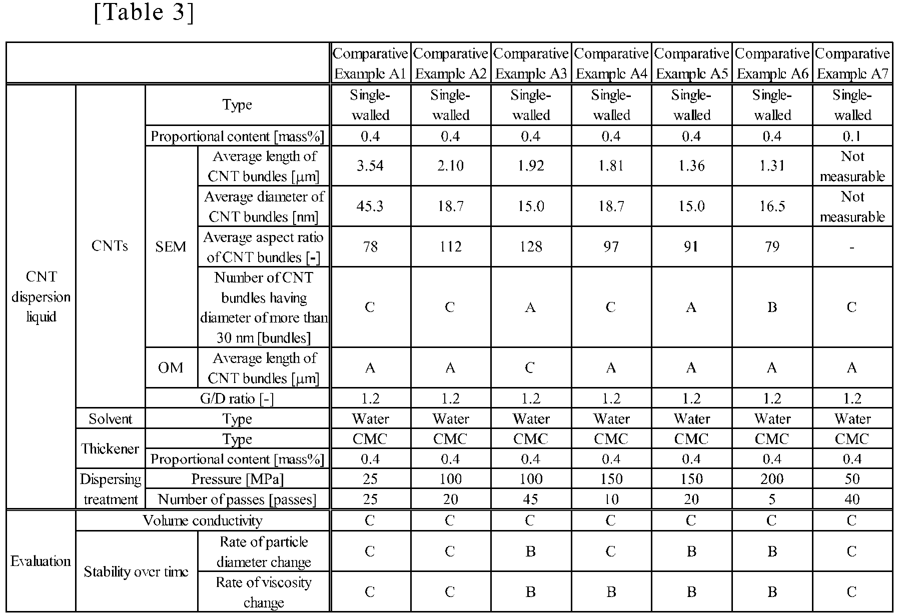

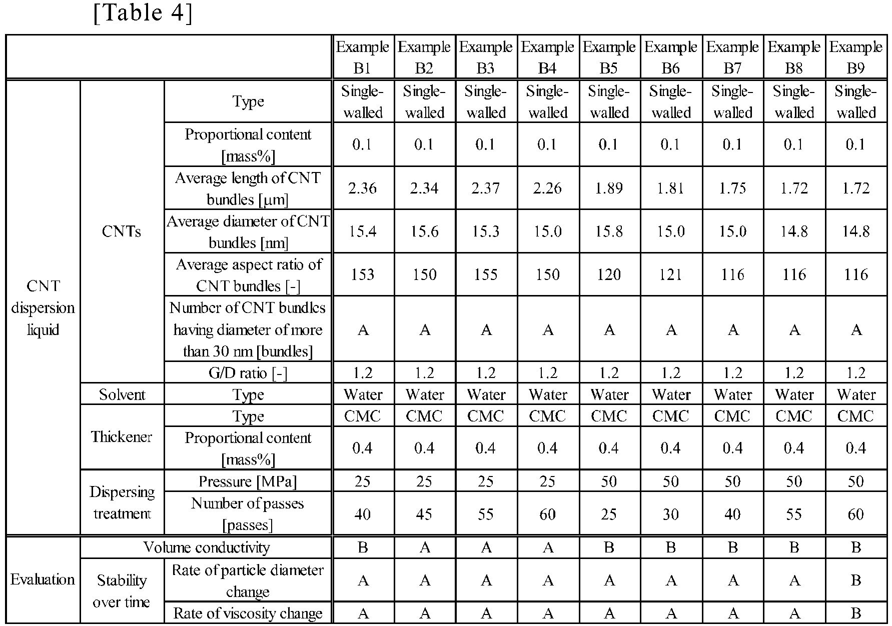

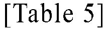

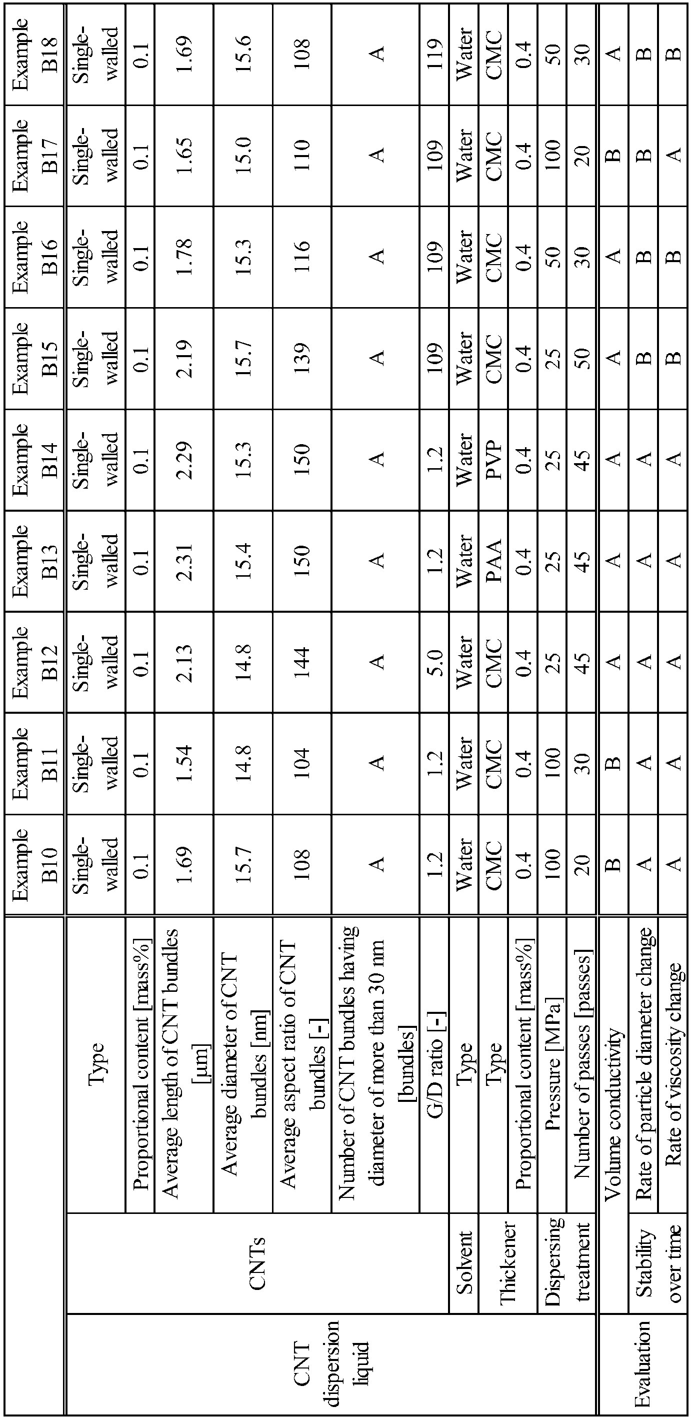

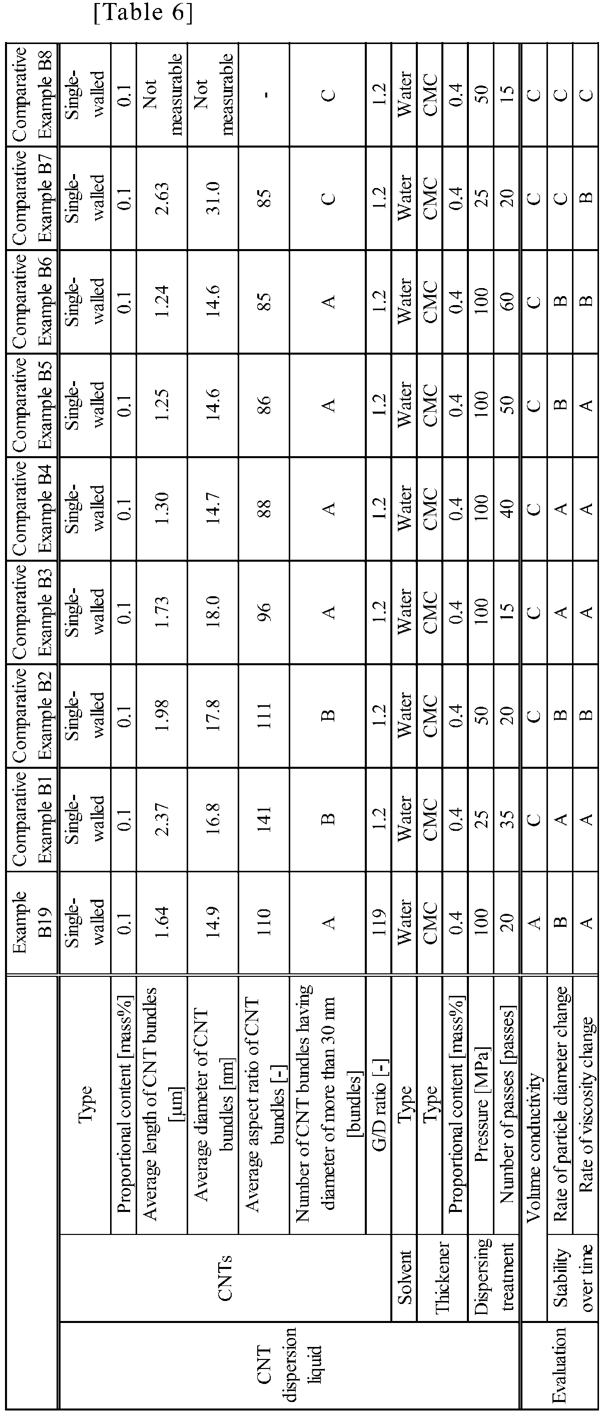

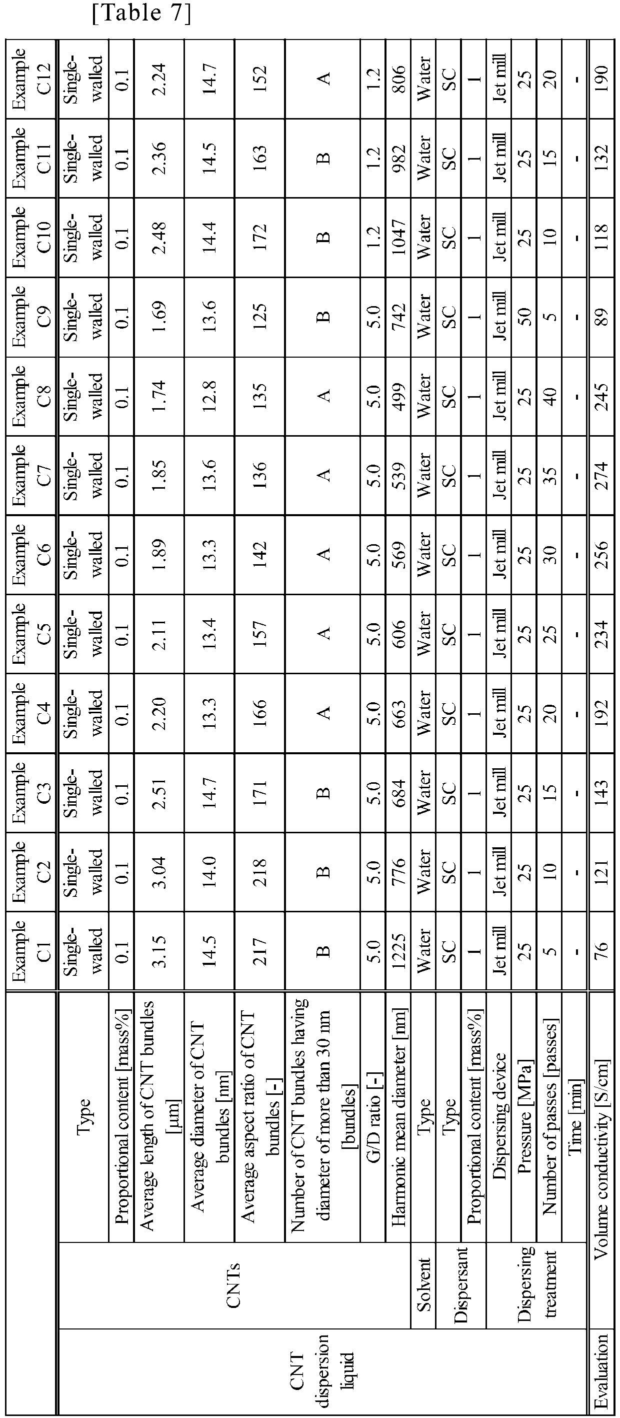

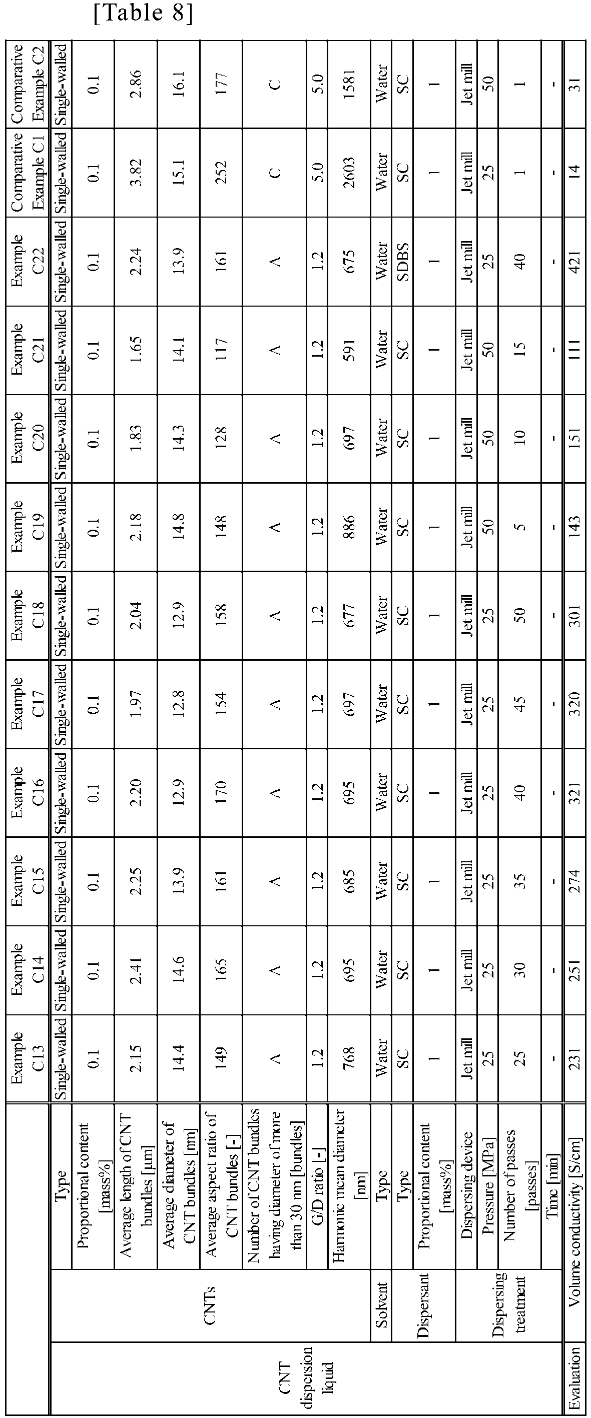

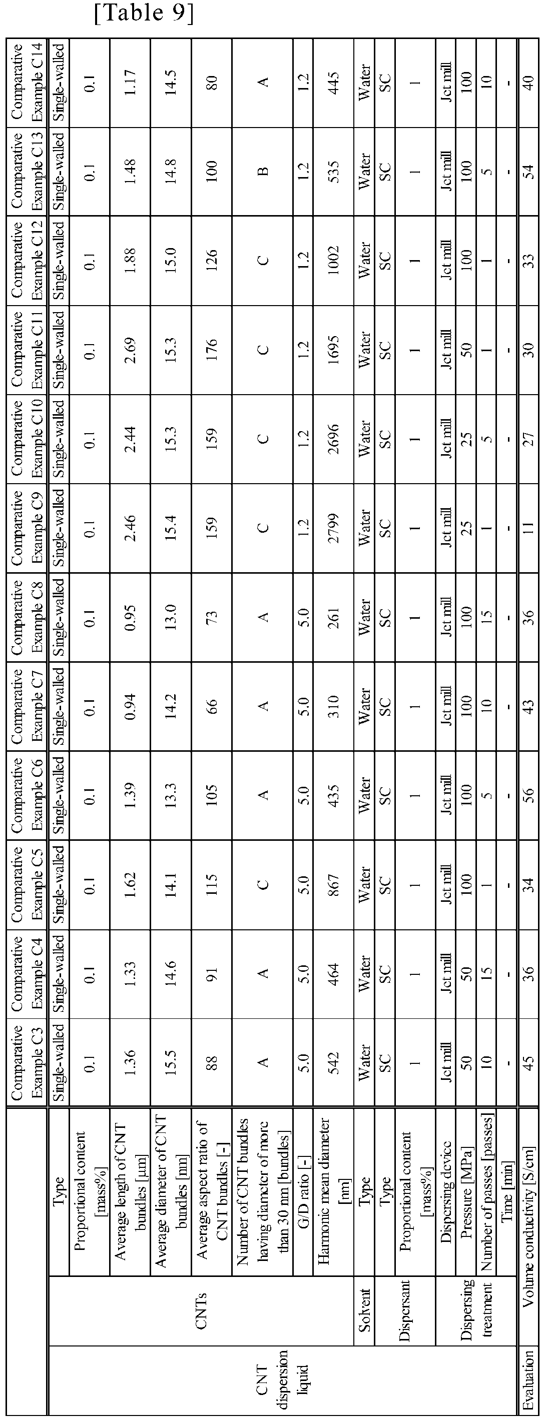

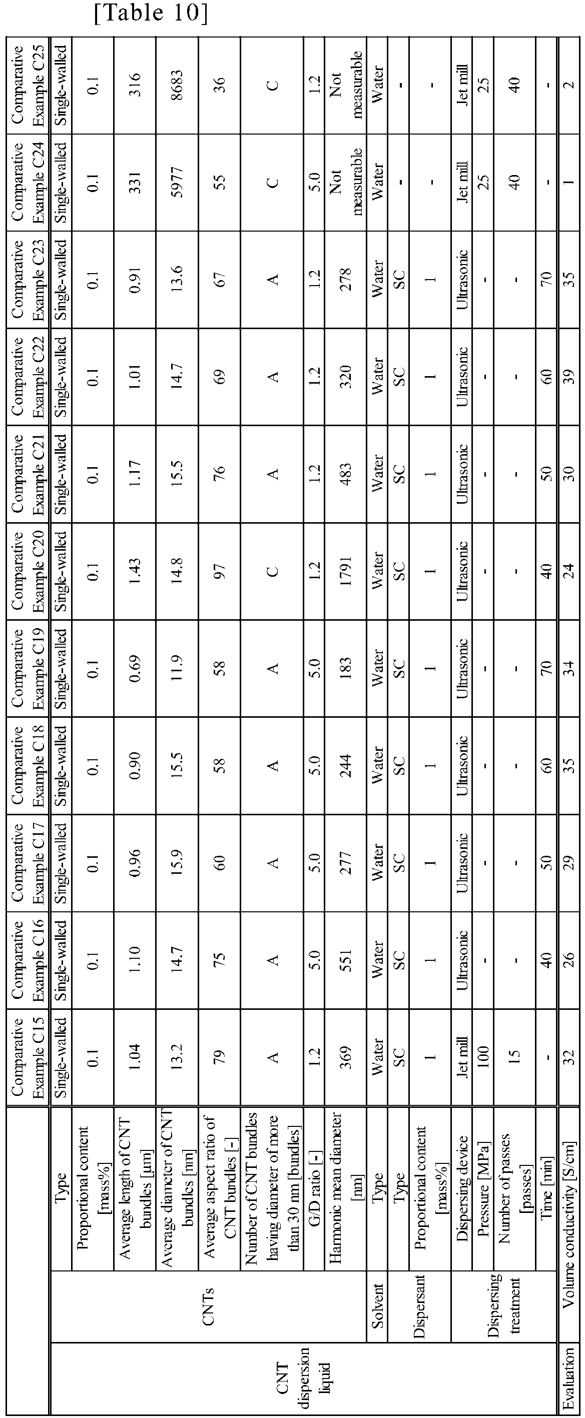

### <First aspect>

It can be seen from Tables 1 to 3 that in Examples A1 to A21 in which the used CNT dispersion liquid contained single-walled CNTs, a solvent, and a thickener, had an average length of CNT bundles of more than a specific value, an average diameter of CNT bundles of not more than a specific value, and a number of CNT bundles having a diameter of more than 30.0 nm among 100 CNT bundles of not more than a specific value upon observation using an SEM, and had an average length of CNT bundles of not less than a specific value upon observation using an optical microscope, it was possible to produce a CNT dispersion liquid having excellent dispersion state stability over time and a carbon film having excellent electrical conductivity.

On the other hand, it can be seen that in Comparative Examples A1, A2, and A4 in which the average diameter and the number of CNT bundles having a diameter of more than 30.0 nm were more than specific values and in Comparative Example A7 in which the number of CNT bundles having a diameter of more than 30.0 nm was more than a specific value, dispersion state stability over time of a CNT dispersion liquid and electrical conductivity of a carbon film decreased compared to in Examples A1 to A21.

It can also be seen that in Comparative Example A3 in which the average length upon observation using an optical microscope was less than a specific value and in Comparative Examples A5 and A6 in which the average length upon observation using an SEM was not more than a specific value, electrical conductivity of a carbon film decreased compared to in Examples A1 to A21.

### <Second aspect>

It can be seen from Tables 4 to 6 that in Examples B1 to B19 in which the used CNT dispersion liquid contained single-walled CNTs, a solvent, and a thickener and had an average length of CNT bundles of more than a specific value, an average diameter of CNT bundles of not more than a specific value, and a number of CNT bundles having a diameter of more than 30.0 nm among 100 CNT bundles of not more than a specific value, it was possible to produce a CNT dispersion liquid having excellent dispersion state stability over time and a carbon film having excellent electrical conductivity.

On the other hand, it can be seen that in Comparative Examples B1 to B3 in which the average diameter of CNT bundles was more than a specific value and in Comparative Examples B4 to B6 in which the average length of CNT bundles was not more than a specific value, electrical conductivity of a carbon film decreased compared to in Examples B1 to B19.

It can also be seen that in Comparative Example B7 in which the average diameter of CNT bundles was more than a specific value and the number of CNT bundles having a diameter of more than 30.0 nm among 100 CNT bundles was more than a specific value, dispersion state stability over time of a CNT dispersion liquid and electrical conductivity of a carbon film decreased compared to in Examples B1 to B19.

It can also be seen that in Comparative Example B8 in which the number of CNT bundles having a diameter of more than 30.0 nm among 100 CNT bundles was more than a specific value, dispersion state stability over time of a CNT dispersion liquid and electrical conductivity of a carbon film decreased compared to in Examples B1 to B19.

### <Third aspect>

It can be seen from Tables 7 to 10 that in Examples C1 to C22 in which the used CNT dispersion liquid contained single-walled CNTs, a solvent, and a dispersant and had an average length of CNT bundles of more than a specific value, an average diameter of CNT bundles of less than a specific value, and a number of CNT bundles having a diameter of more than 30.0 nm among 100 CNT bundles of not more than a specific value, it was possible to produce a carbon film having excellent electrical conductivity.

On the other hand, it can be seen that in Comparative Examples C1 to C23 in which the used CNT dispersion liquid had at least one among the average length of CNT bundles, the average diameter of CNT bundles, and the number of CNT bundles having a diameter of more than 30.0 nm among 100 CNT bundles that was outside of a specific range, electrical conductivity of a carbon film decreased compared to in Examples C1 to C22.

It can also be seen that in Comparative Examples C24 and C25 in which the used CNT dispersion liquid did not contain a dispersant, electrical conductivity of a carbon film decreased compared to in Examples C1 to C22.

### INDUSTRIAL APPLICABILITY

According to the present disclosure (first aspect and second aspect), it is possible to provide a carbon nanotube dispersion liquid that has excellent dispersion state stability over time and is capable of forming a shaped product having excellent electrical conductivity.

Moreover, according to the present disclosure (third aspect), it is possible to provide a carbon nanotube dispersion liquid that is capable of forming a shaped product having excellent electrical conductivity and a method of producing this carbon nanotube dispersion liquid.

## Claims

1. A carbon nanotube dispersion liquid comprising: a plurality of carbon nanotubes; a solvent; and a thickener, wherein
the plurality of carbon nanotubes include single-walled carbon nanotubes,
at least some of the plurality of carbon nanotubes form carbon nanotube bundles,
upon observation of the carbon nanotube bundles using a scanning electron microscope, an average length of the carbon nanotube bundles is more than 1.50 µm, an average diameter of the carbon nanotube bundles is 18.0 nm or less, and a number of bundles having a diameter of more than 30.0 nm among 100 of the carbon nanotube bundles is 15 or less, and
upon observation of the carbon nanotube bundles using an optical microscope, an average length of the carbon nanotube bundles is 8.0 µm or more.

2. A carbon nanotube dispersion liquid comprising: a plurality of carbon nanotubes; a solvent; and a thickener, wherein
the plurality of carbon nanotubes include single-walled carbon nanotubes,
at least some of the plurality of carbon nanotubes form carbon nanotube bundles, and
upon observation of the carbon nanotube bundles using a scanning electron microscope, an average length of the carbon nanotube bundles is more than 1.50 µm, an average diameter of the carbon nanotube bundles is 16.0 nm or less, and a number of bundles having a diameter of more than 30.0 nm among 100 of the carbon nanotube bundles is 15 or less.

3. The carbon nanotube dispersion liquid according to claim 1 or 2, wherein an average aspect ratio of the carbon nanotube bundles is more than 100.

4. The carbon nanotube dispersion liquid according to claim 1 or 2, wherein a G/D ratio of the carbon nanotubes is not less than 0.5 and not more than 120.

5. The carbon nanotube dispersion liquid according to claim 1 or 2, wherein the thickener includes one or more selected from the group consisting of a cellulosic polymer, a polycarboxylic acid, and polyvinylpyrrolidone.

6. A carbon nanotube dispersion liquid comprising: a plurality of carbon nanotubes; a solvent; and a dispersant, wherein
the plurality of carbon nanotubes include single-walled carbon nanotubes,
at least some of the plurality of carbon nanotubes form carbon nanotube bundles, and
upon observation of the carbon nanotube bundles using a scanning electron microscope, an average length of the carbon nanotube bundles is more than 1.5 µm, an average diameter of the carbon nanotube bundles is less than 15.0 nm, and a number of bundles having a diameter of more than 30.0 nm among 100 of the carbon nanotube bundles is 10 or less.

7. The carbon nanotube dispersion liquid according to claim 6, wherein an average aspect ratio of the carbon nanotube bundles is more than 120.

8. The carbon nanotube dispersion liquid according to claim 6, wherein a G/D ratio of the carbon nanotubes is not less than 0.5 and not more than 20.

9. The carbon nanotube dispersion liquid according to claim 6, wherein a harmonic mean diameter of the carbon nanotubes is more than 500 nm.

10. A method of producing a carbon nanotube dispersion liquid that is a method of producing the carbon nanotube dispersion liquid according to any one of claims 6 to 9, comprising performing dispersing treatment of a mixture containing the plurality of carbon nanotubes, the solvent, and the dispersant using a wet jet mill.

11. The method of producing a carbon nanotube dispersion liquid according to claim 10, wherein
pressure applied to the mixture in the dispersing treatment is 50 MPa or less, and
a number of passes in the dispersing treatment is 10 or more.
